# EUROPÄISCHE PATENTSCHRIFT

(11) **EP 3 517 914 B1**
(45) Veröffentlichungstag und Bekanntmachung des Hinweises auf die Patenterteilung: **17.04.2024**
(21) Anmeldenummer: 19163070.6
(22) Anmeldetag: 20.07.2018
(51) Int. Cl.: G01L 1/22, G01G 3/14, G01G 19/18

(54) **LASTMESSEINRICHTUNG UND BETRIEBSVERFAHREN HIERFÜR**
LOAD MEASURING DEVICE AND OPERATING METHOD FOR SAME
DISPOSITIF DE MESURE DE CHARGE ET PROCÉDÉ DE FONCTIONNEMENT CORRESPONDANT

(30) Priorität: 02.08.2017 DE 102017117553
(43) Veröffentlichungstag der Anmeldung: 31.07.2019
(62) Teilanmeldung aus: 18184594.2
(73) Patentinhaber: Neumann & Müller GmbH & Co. KG, 73730 Esslingen (DE)
(72) Erfinder:
(74) Vertreter: DREISS Patentanwälte PartG mbB

(56) Entgegenhaltungen:
- WO-A1-2014/063773
- WO-A1-2017/066508
- DE-A1- 19 613 038
- DE-A1-102006 004 285
- GB-A- 2 537 342
- US-A1- 2010 076 701
- US-A1- 2013 213 144
- US-A1- 2016 327 427
- Anonymous: "SAFETY ABOVE ALL- Ron StageMaster Load Monitoring Systems", , 1 December 2014 (2014-12-01), XP055519956, Retrieved from the Internet: URL:https://vo-general.s3.amazonaws.com/53 aee5c6-9690-4c74-a82a-09f1d0f1ec68/dnc9ikQ QTO8HFa06XG3k_Eilon_Catalog_2015%20(1).pdf ?AWSAccessKeyId=AKIAJ3YBR5GY2XF7YLGQ&Expir es=1562180076&response-content-disposition =inline;%20filename=Eilon_Catalog_2015%20( 1).pdf&response-content-type=application/p df&Signatu [retrieved on 2018-10-30]

## Beschreibung

### Stand der Technik

Die Erfindung betrifft eine Lastmesseinrichtung mit einem Kraftübertragungselement und mit wenigstens einer Messeinheit zur Ermittlung wenigstens einer eine Verformung wenigstens eines Bereichs des Kraftübertragungselements charakterisierenden Verformungsmessgröße. Die Erfindung betrifft ferner ein Betriebsverfahren für eine derartige Lastmesseinrichtung.

Lastmesseinrichtungen und Betriebsverfahren der vorstehend genannten Art sind bekannt und werden beispielsweise im Bereich der Veranstaltungstechnik bzw. Bühnentechnik eingesetzt, zum Beispiel während eines Aufbauprozesses ("Rigging") einer Theaterbühne, bei dem Geräte wie beispielsweise Beleuchtungsgeräte, Beschallungsgeräte und dergleichen an ein oder mehreren Tragstrukturen angeordnet werden, die z.B. Gebäudeteile wie beispielsweise Decken oder Wände oder daran angeordnete Traversen umfassen können. Von besonderer Bedeutung ist hierbei die Beachtung der maximalen mechanischen, insbesondere statischen, Belastbarkeit der Tragstrukturen, um eine Überlastung der Tragstrukturen bereits während des Aufbaus zu verhindern.

Bekannte Lastmesseinrichtungen können hierbei zwischen der Tragstruktur und einer aufzuhängenden Last angeordnet werden, also gleichsam bezüglich eines Aufhängepunktes an der Tragstruktur in Serie zu der Last "geschaltet" werden. Dadurch wird ermöglicht, dass die Lastmesseinrichtung eine auf den Aufhängepunkt bzw. die Tragstruktur wirkende Kraft, beispielsweise die Gewichtskraft der Last, erfassen kann.

Die bekannten Lastmesseinrichtungen weisen eine vergleichsweise komplexe Konstruktion auf und bieten gleichzeitig nur eine vergleichsweise eingeschränkte Funktionalität.

### Offenbarung der Erfindung

Daher ist es Aufgabe der vorliegenden Erfindung, eine Lastmesseinrichtung der eingangs genannten Art und ein entsprechendes Betriebsverfahren dahingehend zu verbessern, dass eine kostengünstige Konstruktion und ein gesteigerter Gebrauchsnutzen gegeben ist.

Bevorzugte Ausführungsformen beziehen sich auf eine Lastmesseinrichtung gemäß Patentanspruch 1. Diese Konfiguration ermöglicht vorteilhaft eine gegenüber den bekannten Lastmesseinrichtungen gesteigerte Funktionalität insbesondere im Hinblick auf die Möglichkeiten zur Konfiguration bzw. Parametrierung eines Betriebs der Lastmesseinrichtung und im Hinblick auf eine Signalisierung von Betriebszuständen, insbesondere kritischen Betriebszuständen, an externe Einheiten.

US 2016/327427 A1 beschreibt eine Lastzelle für einen Deckel eines Medikamentenbehälters.

US 2010/076701 A1 beschreibt eine resistive Kraftmesseinrichtung.

GB 2 537 342 A beschreibt einen Kabelzug-Drehwirbel mit Lastsensor.

Besonders bevorzugt kann bei der erfindungsgemäßen Lastmesseinrichtung die erste Schnittstelle zum Austausch von Konfigurationsdaten mit wenigstens einer ersten externen Einheit genutzt werden, während die zweite Schnittstelle zum Datenaustausch mit wenigstens einer zweiten externen Einheit genutzt werden kann. Der Datenaustausch mit der zweiten externen Einheit kann beispielsweise eine Signalisierung wenigstens eines Betriebszustands der Lastmesseinrichtung zum Gegenstand haben.

Bei einer bevorzugten Ausführungsform weist die erste Schnittstelle einen ersten Schnittstellentyp auf, und die zweite Schnittstelle weist einen zweiten Schnittstellentyp auf, der von dem ersten Schnittstellentyp verschieden ist. Besonders bevorzugt ist der erste Schnittstellentyp eine RFID ("radio frequency identification")-Schnittstelle oder eine NFC ("near field communication", deutsch: "Nahfeldkommunikation")-Schnittstelle.

Im Falle einer RFID-Schnittstelle kann die erste Schnittstelle beispielsweise zum Datenaustausch mittels elektromagnetischer Wellen, insbesondere Kurzwellen (Frequenzbereich von etwa 3 MHz (Megahertz) bis etwa 30 MHz), ausgebildet sein. Besonders bevorzugt kann die erste Schnittstelle zum Datenaustausch mittels Kurzwellen im Bereich von etwa 13,56 MHz ausgebildet sein. Weiter bevorzugt kann die erste Schnittstelle kompatibel zu dem Standard ISO-15693 ausgebildet sein. Ganz besonders bevorzugt kann die erste Schnittstelle beispielsweise einen RFID-Kommunikationsbaustein des Herstellers Melexis vom Typ MLX90129 oder einen hiermit vergleichbaren Kommunikationsbaustein aufweisen. Bei bevorzugten Ausführungsformen weist die RFID-Schnittstelle eine Reichweite von etwa wenigen Metern bis etwa wenigen 10 m auf.

Im Falle einer NFC-Schnittstelle kann die erste Schnittstelle beispielsweise zum Datenaustausch mittels elektrischer oder magnetischer und/oder elektromagnetischer Felder ausgebildet sein. Bei manchen Ausführungsformen können hierfür Frequenzbereiche genutzt werden, wie sie den vorstehend unter Bezugnahme auf die RFI D-Schnittstelle genannten Frequenzbereichen entsprechen. Bei bevorzugten Ausführungsformen weist die NFC Schnittstelle eine Reichweite von weniger als etwa einigen Metern, insbesondere weniger als etwa 20 cm auf.

Bei einer weiteren Ausführungsform ist der zweite Schnittstellentyp eine WLAN ("wireless local area network")-Schnittstelle, wobei die WLAN Schnittstelle insbesondere dazu ausgebildet ist, gemäß wenigstens einer Variante des IEEE ("Institute of Electrical and Electronics Engineers")- Standards 802.11 zu arbeiten, beispielsweise gemäß IEEE 802.11 b/g/n.

Bei weiteren Ausführungsformen kann die zweite Schnittstelle auch andersartig ausgebildet sein (anstelle einer WLAN-Schnittstelle), beispielsweise als Datenschnittstelle, die nach wenigstens einem Standard eines zellulären Mobilfunknetzes arbeitet, beispielsweise nach dem LTE ("Long Term Evolution")-Standard.

Bei einer ganz besonders bevorzugten Ausführungsform ist die erste Schnittstelle eine RFID-Schnittstelle und die zweite Schnittstelle eine WLAN-Schnittstelle. Dies ermöglicht vorteilhaft eine Konfiguration bzw. Parametrierung der Lastmesseinrichtung, insbesondere vor Ort, also an einem Montageort der Lastmesseinrichtung bzw. im Bereich des Montageorts (z.B. innerhalb eines Umkreises von wenigen Metern), mittels eines Handgeräts, welches eine zu der ersten Schnittstelle kompatible RFID-Schnittstelle aufweist. Gleichzeitig ist über die WLAN-Schnittstelle eine Datenanbindung der Lastmesseinrichtung an eine gegebenenfalls weiter entfernt angeordnete externe Einheit wie beispielsweise eine Zentrale ermöglicht. Auf diese Weise kann eine Zentrale mehrere oder sogar viele Lastmesseinrichtungen gemäß der vorliegenden Erfindung überwachen.

Bei weiteren Ausführungsformen ist es auch denkbar, dass eine Konfiguration bzw. Parametrierung einer Lastmesseinrichtung alternativ oder ergänzend zu der ersten Schnittstelle über die zweite Schnittstelle, beispielsweise eine WLAN Schnittstelle, erfolgt. Bei anderen Ausführungsformen kann diese Möglichkeit jedoch auch gezielt unterbunden werden, beispielsweise um zu erzwingen, dass die Parametrierung bzw. Konfiguration der Lastmesseinrichtung nur aus vergleichsweise großer räumlicher Nähe, beispielsweise mittels des vorstehend bereits genannten Mobilgeräts bzw. Handgeräts, beispielsweise unter Anwesenheit einer das Handgerät bedienenden Bedienperson, ermöglicht ist.

Bei weiteren Ausführungsformen ist es auch denkbar, dass eine Übermittlung von einen Betriebszustand der Lastmesseinrichtung charakterisierenden Informationen alternativ oder ergänzend zu der zweiten Schnittstelle über die erste Schnittstelle, beispielsweise die RFID-Schnittstelle, erfolgt.

Bei einer weiteren vorteilhaften Ausführungsform weist die Steuereinheit der Lastmesseinrichtung wenigstens eine Recheneinheit auf, insbesondere einen Mikrocontroller und/oder einen Mikroprozessor und/oder einen digitalen Signalprozessor (DSP) und/oder einen anwendungsspezifischen integrierten Schaltkreis (ASIC, "application specific integrated circuit") und/oder einen programmierbaren Logikbaustein (z.B. FPGA, "field programmable gate array") oder dergleichen. Dies ermöglicht vorteilhaft eine effiziente Steuerung eines Betriebs der Lastmesseinrichtung, wobei bevorzugten Ausführungsformen zufolge insbesondere die erste Schnittstelle und/oder die zweite Schnittstelle und/oder die Messeinheit mittels der Recheneinheit steuerbar sind.

Des Weiteren ist es denkbar, bei manchen Ausführungsformen die Funktionalität der erfindungsgemäßen Lastmesseinrichtung dadurch zu ändern bzw. zu erweitern, dass eine Software bzw. Firmware, die einen Betrieb der Recheneinheit steuert, geändert bzw. erweitert wird.

Der Recheneinheit kann bei einer weiteren Ausführungsform eine Speichereinrichtung zugeordnet sein, die beispielsweise einen Arbeitsspeicher (RAM, "random access memory") und/oder einen Festwertspeicher (ROM, "read only memory") und/oder andere flüchtige bzw. nichtflüchtige Speicher (beispielsweise FLASH-EEPROM) oder beliebige Kombinationen hieraus aufweist. Bei manchen Ausführungsformen kann die Recheneinheit beispielsweise als Mikrocontroller mit integrierter Speichereinrichtung ausgebildet sein.

Die Lastmesseinrichtung weist einen lokalen Konfigurationsspeicher zur zumindest zeitweisen Speicherung von Konfigurationsdaten auf. Die Konfigurationsdaten können beispielsweise einen Betrieb der Lastmesseinrichtung charakterisieren bzw. zur Parametrierung der Lastmesseinrichtung dienen. Der lokale Konfigurationsspeicher kann bei bevorzugten Ausführungsformen beispielsweise Bestandteil der Speichereinrichtung der Recheneinheit sei

Die Lastmesseinrichtung ist dazu ausgebildet, mittels der ersten Schnittstelle erste Konfigurationsdaten von der ersten externen Einheit zu empfangen. Dadurch ist vorteilhaft die Möglichkeit gegeben, Konfigurationsdaten bzw. sonstige Daten von der externen Einheit, beispielsweise einem Mobilgerät bzw. Handgerät, das einer Bedienperson zugeordnet ist, an die Lastmesseinrichtung zu übertragen, besonders bevorzugt mittels einer als RFID-Schnittstelle ausgebildeten ersten Schnittstelle.

Beispielsweise kann bei manchen Ausführungsformen auf diese Weise eine sogenannte Grundkonfiguration an die Lastmesseinrichtung übertragen werden, die beispielsweise in dem bereits beschriebenen Konfigurationsspeicher zumindest zeitweise speicherbar ist. Bevorzugt wird die Grundkonfiguration in einem nichtflüchtigen Speicher der Lastmesseinrichtung bzw. ihrer Recheneinheit abgelegt.

Bei bevorzugten Ausführungsformen kann die Grundkonfiguration wenigstens einen der folgenden Werte umfassen: einen oder mehrere Parameter, die einen Betrieb der Lastmesseinrichtung steuern, insbesondere Parameter, die unterschiedliche mögliche Betriebsarten der Lastmesseinrichtung charakterisieren bzw. die Zustandsübergänge zwischen unterschiedlichen Betriebsarten charakterisieren, einen oder mehrere Schwellwerte ("Kraftobergrenze") für eine Auswertung der Verformungsmessgröße, Zugangsdaten, die eine geschützte Datenverbindung der Lastmesseinrichtung über die zweite Schnittstelle mit der wenigstens einen zweiten externen Einheit ermöglichen (beispielsweise WLAN-Zugangsdaten (zum Beispiel einen Netzwerknamen eines drahtlosen Netzwerkes und/oder ein Sicherheitskennwort, das für ein Beitreten zu dem drahtlosen Netzwerk bzw. WLAN erforderlich ist) im Falle der Ausbildung der zweiten Schnittstelle als WLAN-Schnittstelle).

Bei einer bevorzugten Ausführungsform kann die Grundkonfiguration in Form einer oder mehrerer Initialisierungsdateien ("*.ini"-Datei) vorliegen, was beispielsweise eine einfache Verwaltung der betreffenden Konfigurationen für ein oder mehrere Lastmesseinrichtungen ermöglicht. Insbesondere können dadurch auch auf einem zentralen System bzw. einer Zentrale eines Lastmesssystems, welches mehrere Lastmesseinrichtungen aufweist, einfach unterschiedliche Konfigurationen für verschiedene der vorhandenen Lastmesseinrichtungen vorgehalten werden.

Bei einer weiteren vorteilhaften Ausführungsform ist die Lastmesseinrichtung dazu ausgebildet, zumindest zeitweise über die zweite Schnittstelle eine Datenverbindung zu der zweiten externen Einheit aufzubauen, wobei die Lastmesseinrichtung insbesondere dazu ausgebildet ist, wenigstens eine erste einen Betriebszustand der Lastmesseinrichtung charakterisierende Betriebsinformation über die zweite Schnittstelle an die zweite externe Einheit zu senden. Die Betriebsinformation kann beispielsweise einen aktuell eingenommenen Betriebszustand bzw. eine Betriebsart der Lastmesseinrichtung signalisieren. Beispielsweise kann die Betriebsinformation einen Alarmzustand bzw. eine Alarmbetriebsart signalisieren, insbesondere dann, wenn eine Auswertung einer erfassten Verformungsmessgröße ergeben hat, dass ein vorgebbarer erster Schwellwert überschritten worden ist.

Bei einer weiteren vorteilhaften Ausführungsform weist die Lastmesseinrichtung eine aufladbare elektrische Energieversorgungseinrichtung auf. Die Energieversorgungseinrichtung kann beispielsweise wenigstens einen Akkumulator und/oder wenigstens einen Kondensator, insbesondere wenigstens einen Doppelschichtkondensator ("Ultracap"), oder beliebige Kombinationen hieraus aufweisen.

Bei einer weiteren Ausführungsform weist die Lastmesseinrichtung eine Ladeeinrichtung zum induktiven Aufladen der Energieversorgungseinrichtung bzw. darin vorgesehener elektrischer Energiespeicher auf. Dadurch ist ein besonders einfaches und effizientes Aufladen ermöglicht. Alternativ oder ergänzend kann auch eine Ladeschnittstelle mit elektrischen Kontakten (galvanische Verbindung) vorgesehen sein.

Bei einer weiteren Ausführungsform weist die Lastmesseinrichtung wenigstens eine optische Signalisiereinrichtung auf, die insbesondere zur Ausgabe wenigstens eines einen Betriebszustand wenigstens einer Komponente der Lastmesseinrichtung charakterisierenden optischen Signals ausgebildet ist. Dadurch kann ein Betriebszustand der Lastmesseinrichtung bzw. ihrer betreffenden Komponente(n) vorteilhaft in der unmittelbaren Umgebung der Lastmesseinrichtung visuell wahrgenommen werden, beispielsweise durch eine Bedienperson, die für den Betrieb der Lastmesseinrichtung zuständig ist. Alternativ oder ergänzend kann der vorstehend genannte Betriebszustand wie vorstehend ebenfalls bereits beschrieben über eine der Schnittstellen, insbesondere die zweite Schnittstelle, besonders bevorzugt über eine WLAN-Schnittstelle, an eine externe Einheit übertragen werden.

Die optische Signalisiereinrichtung weist bei bevorzugten Ausführungsformen wenigstens eine Halbleiterlichtquelle, insbesondere eine Licht emittierende Diode (Leuchtdiode, LED) auf. Besonders bevorzugt kann die optische Signalisiereinrichtung auch eine Mehrzahl von LEDs aufweisen, die beispielsweise auch Licht unterschiedlicher Farben (zum Beispiel rot, gelb, grün) abgeben können.

Alternativ oder ergänzend zu einer optischen Signalisiereinrichtung kann auch wenigstens eine akustische Signalisiereinrichtung vorgesehen sein, beispielsweise aufweisend einen Piezo-Signalgeber, der zur Ausgabe von ein oder mehrere Betriebszustände bzw. Betriebsarten der Lastmesseinrichtung charakterisierender akustischer Signale ausgebildet ist.

Bei einer weiteren vorteilhaften Ausführungsform ist die Steuereinheit dazu ausgebildet, zumindest zeitweise wenigstens eine der folgenden Betriebsarten einzunehmen:
a) eine erste Betriebsart, insbesondere Bereitschaftsbetriebsart ("standby"), wobei insbesondere die Steuereinheit dazu ausgebildet ist, in der ersten Betriebsart die Verformungsmessgröße, vorzugsweise periodisch, auszuwerten, insbesondere mit einem ersten Schwellwert zu vergleichen,
b) eine zweite Betriebsart ("live"), insbesondere Live-Betriebsart, wobei insbesondere die Steuereinheit dazu ausgebildet ist, in der zweiten Betriebsart die Verformungsmessgröße, vorzugsweise periodisch, auszuwerten, insbesondere mit einem zweiten Schwellwert (der z.B. gleich dem ersten Schwellwert ist) zu vergleichen,
c) eine dritte Betriebsart ("Alarm"), insbesondere Alarmbetriebsart, wobei insbesondere die Steuereinheit dazu ausgebildet ist, in der dritten Betriebsart wenigstens eine zweite einen Betriebszustand der Lastmesseinrichtung charakterisierende Betriebsinformation (z.B. ein Alarmsignal) an die zweite externe Einheit zu senden und/oder ein optisches Signal auszugeben, beispielsweise mittels einer optional vorhandenen optischen Signalisiereinrichtung.

Bei einer weiteren Ausführungsform kann vorgesehen sein, dass in der ersten Betriebsart eine periodische Auswertung (zum Beispiel Vergleich der Verformungsmessgröße mit einem entsprechenden ersten Schwellwert) mit einer ersten Periodendauer erfolgt, während in der zweiten Betriebsart eine periodische Auswertung (zum Beispiel Vergleich der Verformungsmessgröße mit einem entsprechenden zweiten Schwellwert) mit einer zweiten Periodendauer erfolgt, die von der ersten Periodendauer verschieden ist, insbesondere kleiner ist als die erste Periodendauer.

Bei weiteren bevorzugten Ausführungsformen kann die Lastmesseinrichtung bzw. ihre Steuereinheit jede der vorstehend genannten Betriebsarten einnehmen, weist also insgesamt wenigstens diese drei möglichen Betriebsarten auf. Es versteht sich, dass bei bevorzugten Ausführungsformen in einem betrachteten Zeitintervall jeweils nur eine der vorstehend genannten drei Betriebsarten einnehmbar ist.

Bei einer weiteren vorteilhaften Ausführungsform ist vorgesehen, dass das Kraftübertragungselement eine Grundform mit einem ersten axialen Endbereich und einem zweiten axialen Endbereich aufweist, wobei in dem ersten axialen Endbereich erste Befestigungsmittel zum Herstellen einer vorzugsweise formschlüssigen Bindung mit einer ersten Komponente vorgesehen sind, und wobei in dem zweiten axialen Endbereich zweite Befestigungsmittel zum Herstellen einer, vorzugsweise formschlüssigen, Verbindung mit einer zweiten externen Komponente vorgesehen sind.

Besonders bevorzugt ist die Grundform des Kraftübertragungselements einer Ausführungsform zufolge im Wesentlichen länglich, weist also eine Länge und eine Breite auf, wobei die Länge größer als die zweifache Breite ist.

Bei einer besonders bevorzugten Ausführungsform beträgt eine Länge des Kraftübertragungselements zwischen etwa 8 cm (Zentimeter) und etwa 15 cm, insbesondere zwischen etwa 10 cm und etwa 12 cm. Dadurch ist eine besonders klein bauende Konfiguration gegeben, die sich nur unwesentlich auf das Zielsystem, beispielsweise einen zu erstellenden Bühnenaufbau mit abgehängten Lasten, auswirkt. Insbesondere kann die Lastmesseinrichtung gemäß der Ausführungsformen daher auch vorteilhaft bei solchen Aufbauten verwendet werden, bei denen eine für die Aufhängung verfügbare Höhe, beispielsweise Deckenhöhe, vergleichsweise gering ist.

Bei einer weiteren besonders bevorzugten Ausführungsform beträgt eine Breite des Kraftübertragungselements zwischen etwa 2 cm und etwa 5 cm, besonders bevorzugt zwischen etwa 2,9 cm und etwa 5,4 cm.

Bei einer Ausführungsform umfassen die ersten und/oder zweiten Befestigungsmittel Öffnungen, insbesondere Bohrungen oder sonstige Ausschnitte in den jeweiligen Bereichen des Kraftübertragungselements. Beispielsweise können die mit der Lastmesseinrichtung zu verbindenden ersten bzw. zweiten Komponenten mittels Karabinern und/oder Schäkeln und/oder sonstigen an sich bekannten Befestigungs- bzw. Sicherungsmitteln verbunden werden.

Alternativ oder ergänzend zu formschlüssigen Verbindungen sind - zumindest in manchen möglichen Anwendungsszenarien - auch kraftschlüssige Verbindungen zu den externen Komponenten denkbar.

Bei einer weiteren vorteilhaften Ausführungsform ist das Kraftübertragungselement im Wesentlichen plattenförmig ausgebildet, vorzugsweise einstückig, was einen einfachen Aufbau und eine vergleichsweise große Stabilität bietet. Unter "plattenförmig" wird vorliegend verstanden, dass eine Dicke des Materials des Kraftübertragungselements über die gesamte Breite und/oder Länge im Wesentlichen konstant und wesentlich kleiner als seine Breite und/oder wesentlich kleiner als seine Länge ist. Besonders bevorzugt ist die Dicke des Kraftübertragungselements kleiner als 30 % (Prozent) seiner maximalen Breite. Bei einer besonders bevorzugten Ausführungsform beträgt eine Dicke des Kraftübertragungselements zwischen etwa 6 mm und etwa 10 mm, vorzugsweise etwa 8 mm.

Bei einer besonders bevorzugten Ausführungsform ist das Kraftübertragungselement durch ein Blechelement, insbesondere Stahlblech, gebildet. Besonders bevorzugt wird das Kraftübertragungselement mittels Laserschneidverfahren hergestellt, also aus einem Ausgangswerkstück herausgeschnitten, was eine besonders effiziente und kostengünstige Fertigung ermöglicht.

Bei einer weiteren besonders bevorzugten Ausführungsform weist die Lastmesseinrichtung bzw. ihr Kraftübertragungselement einen Sicherheitsfaktor gegen Bruch von SF10 auf, wodurch vorteilhaft der Vorschrift DGUV17/18 der Deutschen gesetzlichen Unfallversicherung entsprochen wird.

Bei einer weiteren Ausführungsform ist vorgesehen, dass wenigstens eine erste Schaltungsträgerplatte ("Platine") auf einer ersten Oberfläche des Kraftübertragungselements angeordnet ist, wobei insbesondere wenigstens eine weitere Schaltungsträgerplatte auf einer zweiten Oberfläche des Kraftübertragungselements angeordnet ist, die der ersten Oberfläche gegenüberliegt. Dadurch ist vorteilhaft die Möglichkeit gegeben, ein oder mehrere elektronische Komponenten, beispielsweise eine Recheneinheit der Steuereinheit, Halbleiterspeicher, die optische Signalisiereinrichtung oder sonstige elektrische oder mechanische oder elektromechanische Komponenten dicht an dem Kraftübertragungselement anzuordnen, wodurch sich eine besonders klein bauende Konfiguration ergibt.

Besonders vorteilhaft können bei manchen Ausführungsformen mehrere Platinen übereinander angeordnet werden, wodurch weiterer Bauraum für die Vorsehung elektrischer und/oder elektromechanische oder ob der elektronischer Bauteile oder dergleichen bereitgestellt wird.

Besonders bevorzugt kann beispielsweise wenigstens eine Komponente der Steuereinheit auf der wenigstens einen ersten Schaltungsträgerplatte angeordnet sein, und es kann wenigstens eine Komponente der ersten und/oder zweiten Schnittstelle auf der wenigstens einen weiteren Schaltungsträgerplatte angeordnet sein. Besonders bevorzugt sind, z.B. im Falle einer gestapelten Konfiguration, bei der mehrere Platinen übereinander angeordnet sind, gegebenenfalls die erste bzw. zweite Schnittstelle bzw. deren Antenne(n) enthaltende Platinen so angeordnet, dass sie möglichst weit entfernt von der Oberfläche des Kraftübertragungselements angeordnet sind, um eine Optimierung der Reichweite für die jeweilige Datenübertragung zu ermöglichen.

Bei einer weiteren vorteilhaften Ausführungsform ist wenigstens eine Komponente einer bzw. der optischen Signalisiereinrichtung auf der wenigstens einen ersten Schaltungsträgerplatte und/oder auf der wenigstens einen zweiten Schaltungsträgerplatte angeordnet, wodurch eine besonders effiziente Anbindung der Signalisiereinrichtung, beispielsweise ihrer Leuchtdioden, an die Steuereinheit und gleichzeitig eine mechanische Fixierung der Leuchtdioden in der Lastmesseinrichtung gegeben ist.

Bei weiteren Ausführungsformen weist die Messeinheit wenigstens einen Dehnungsmessstreifen, bevorzugt jedoch zwei Dehnungsmessstreifen auf, wobei der bzw. die Dehnungsmessstreifen insbesondere an einer Seitenfläche des Kraftübertragungselements angeordnet sind. Unter "Seitenfläche" wird hierbei eine Oberfläche des Kraftübertragungselements verstanden, welche im Wesentlichen orthogonal zu ersten und zweiten Oberfläche des Kraftübertragungselements angeordnet ist, die hinsichtlich ihrer Abmessung durch die Länge und die Breite des Kraftübertragungselements charakterisiert sind. Mit anderen Worten ist die zur Anordnung der Dehnungsmessstreifen vorgesehene Seitenfläche bevorzugt durch die Länge und die Dicke des Kraftübertragungselements begrenzt.

Bei einer weiteren vorteilhaften Ausführungsform weist die Lastmesseinrichtung ein Gehäuse auf, das wenigstens einen axial mittleren Bereich des Kraftübertragungselements umgibt. Besonders bevorzugt sind die ein oder mehreren elektronischen bzw. optoelektronischen Komponenten (Steuereinheit, Recheneinheit, erste Schnittstelle, zweite Schnittstelle) von dem Gehäuse bzw. seinen Komponenten umgeben und auf diese Weise vor Umgebungseinflüssen (Fremdkörper, Schmutz, Feuchtigkeit) geschützt, während bevorzugt die axialen Endbereiche des Kraftübertragungselements nicht von dem Gehäuse bzw. seinen Komponenten umgeben sind und daher frei zugänglich sind für die bevorzugt formschlüssige Anbindung von externen Komponenten, wie beispielsweise Aufhängepunkten bzw. aufzuhängenden Lasten.

Bei einer weiteren vorteilhaften Ausführungsform weist das Gehäuse wenigstens bereichsweise ein transluzentes oder transparentes Material auf, wodurch eine effiziente optische Signalisierung durch die optische Signalisiereinrichtung durch das Gehäuse hindurch ermöglicht ist.

Bei einer weiteren vorteilhaften Ausführungsform weist das Gehäuse der Lastmesseinrichtung wenigstens zwei Halbschalen auf, wobei eine erste Halbschale einer ersten Oberfläche des Kraftübertragungselements zugeordnet ist, und wobei eine zweite Halbschale einer zweiten Oberfläche des Kraftübertragungselements zugeordnet ist, wodurch sich eine besonders einfache und wenig komplexe Konfiguration ergibt, die insbesondere eine effiziente und kostengünstige Fertigung ermöglicht. Gleichzeitig werden durch die beiden Halbschalen jeweils mit einer entsprechenden Oberfläche des Kraftübertragungselements vorteilhaft jeweilige Gehäusekammern realisiert, die zur Aufnahme von Komponenten der Lastmesseinrichtung, beispielsweise der Steuereinheit bzw. entsprechender Schaltungsträgerplatten, dienen.

Als eine weitere Lösung der Aufgabe der vorliegenden Erfindung ist ein Lastmesssystem angegeben, das wenigstens eine erfindungsgemäße Lastmesseinrichtung und eine Zentrale aufweist. Ein oder mehrere der Lastmesseinrichtungen des Lastmesssystems können dabei vorteilhaft Informationen über ihren Betrieb insbesondere mittels der zweiten Schnittstelle, also beispielsweise mittels einer WLAN-Datenverbindung, an die Zentrale übertragen, die dazu ausgebildet sein kann, diese Informationen zumindest zeitweise zu speichern und/oder auszuwerten.

Bei einer bevorzugten Ausführungsform ist vorgesehen, dass das Lastmesssystem Informationen über eine Statik bzw. die mechanische Stabilität von zur Aufhängung von Lasten unter Verwendung der erfindungsgemäßen Lastmesseinrichtungen vorgesehenen Aufhängepunkten bzw. Tragelementen aufweist, wodurch das Lastmesssystem in Abhängigkeit der von den Lastmesseinrichtungen erhaltenen Informationen vorteilhaft den tatsächlichen Belastungszustand der beanspruchten Struktur (Gebäudedecke, Wände, Aufhängepunkte, Tragelemente) ermitteln und gegebenenfalls einen kritischen Belastungszustand signalisieren kann.

Beispielsweise kann bei einem Zielsystem, welches eine Gebäudedecke mit einer ersten Anzahl von Aufhängepunkten aufweist, vorgesehen sein, dass das erfindungsgemäße Lastmesssystem periodisch die aggregierte Belastung der Gebäudedecke ermittelt und mit vorgebbaren Maximalwerten vergleicht. Dadurch ist vorteilhaft sichergestellt, dass auch bei großen Zielsystemen mit komplexen Aufbauten stets die für einen sicheren Betrieb erforderlichen Grenzwerte eingehalten werden.

Des Weiteren kann das Lastmesssystem vorteilhaft dazu ausgebildet sein, weitere Betriebsparameter der Lastmesseinrichtungen zu überwachen, beispielsweise einen Zustand ihrer elektrischen Energiespeichereinrichtung, und dergleichen.

Als eine weitere Lösung der Aufgabe der vorliegenden Erfindung ist ein Verfahren zum Betreiben einer Lastmesseinrichtung gemäß Patentanspruch 10 angegeben. Vorteilhafte Ausgestaltungen sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

In der Zeichnung zeigt:
- Figur 1: schematisch ein Blockdiagramm einer Ausführungsform der erfindungsgemäßen Lastmesseinrichtung,
- Figur 2: schematisch ein Blockdiagramm einer weiteren Ausführungsform der erfindungsgemäßen Lastmesseinrichtung,
- Figur 3: schematisch eine Draufsicht auf eine weitere Ausführungsform der erfindungsgemäßen Lastmesseinrichtung,
- Figur 4A: schematisch eine Draufsicht auf ein Kraftübertragungselement gemäß einer Ausführungsform,
- Figur 4B: schematisch eine Seitenansicht des Kraftübertragungselements aus Figur 4A,
- Figur 5A: schematisch eine Lastmesseinrichtung gemäß einer weiteren Ausführungsform angeordnet in einem Zielsystem,
- Figur 5B: schematisch eine Seitenansicht der Lastmesseinrichtung gemäß Figur 5A,
- Figur 6: schematisch ein vereinfachtes Flussdiagramm einer Ausführungsform eines erfindungsgemäßen Betriebsverfahrens,
- Figur 7: schematisch ein vereinfachtes Zustandsdiagramm gemäß einer Ausführungsform,
- Figur 8: schematisch ein einfach das Flussdiagramm gemäß einer weiteren Ausführungsform, und
- Figur 9: schematisch ein Blockdiagramm eines Lastmesssystems gemäß einer Ausführungsform.

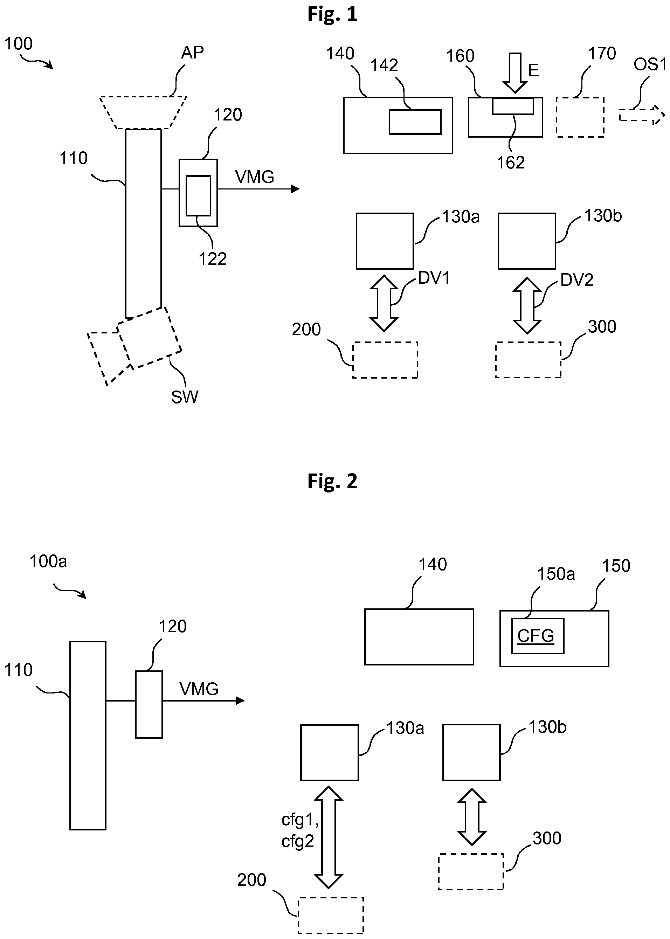

Figur 1 zeigt schematisch ein Blockdiagramm einer Ausführungsform der erfindungsgemäßen Lastmesseinrichtung 100. Die Lastmesseinrichtung 100 weist ein Kraftübertragungselement 110 auf, das zur Übertragung von mechanischen Kräften, insbesondere Zugkräften, ausgebildet ist. Solche Zugkräfte können beispielsweise dann auftreten, wenn eine Last wie beispielsweise ein Scheinwerfer SW mittels der Lastmesseinrichtung 100 an einem Aufhängepunkt AP einer Tragstruktur (z.B. Gebäudedecke, nicht gezeigt) aufgehängt wird. Die Lastmesseinrichtung 100 ermöglicht in diesem Fall die Ermittlung einer Belastung des Aufhängepunktes AP durch den Scheinwerfer SW bzw. seine Gewichtskraft.

Hierzu weist die Lastmesseinrichtung 100 eine Messeinheit 120 zur Ermittlung wenigstens einer Verformungsmessgröße VMG auf, die eine Verformung wenigstens eines Bereichs des Kraftübertragungselements 110 charakterisiert. Unter Beaufschlagung der Gewichtskraft des Scheinwerfers SW bzw. allgemein einer Last verformt sich das Kraftübertragungselement 110 in an sich bekannter Weise, wobei es insbesondere eine dehnende (bzw. je nach Belastungsfall auch stauchende) Verformung erfährt. Diese Verformung kann durch die Messeinheit 120 messtechnisch erfasst und in Form der Verformungsmessgröße VMG bereitgestellt werden. Eine Auswertung der Verformungsmessgröße VMG kann beispielsweise durch eine Steuereinheit 140 der Lastmesseinrichtung 100 erfolgen.

Bei einer bevorzugten Ausführungsform weist die Messeinheit 120 einen oder mehrere Dehnungsmessstreifen 122 auf, wobei die Dehnungsmessstreifen 122 bevorzugt an einer Seitenfläche des Kraftübertragungselements 110 angeordnet sind. Sofern mehrere Dehnungsmessstreifen 122 vorgesehen sind, können diese vorteilhaft zur Ausbildung einer Messbrücke (beispielsweise nach dem Prinzip einer Wheatstone-Messbrücke) miteinander verschaltet werden, was die Empfindlichkeit bezüglich der Ermittlung der Verformungsmessgröße erhöht.

Weiter erfindungsgemäß weist die Lastmesseinrichtung 100 eine erste Schnittstelle 130a zur drahtlosen Datenübertragung mit wenigstens einer ersten externen Einheit 200 auf, sowie eine zweite Schnittstelle 130b zur drahtlosen Datenübertragung mit wenigstens einer zweiten externen Einheit 300.

Bei einer bevorzugten Ausführungsform sind die Schnittstellen 130a, 130b verschiedenartig ausgebildet. Bevorzugt handelt es sich bei der ersten Schnittstelle 130a um eine RFID-Schnittstelle, und bei der zweiten Schnittstelle 130b handelt es sich um eine WLAN-Schnittstelle. Dementsprechend kann die Lastmesseinrichtung 100 über eine erste Datenverbindung DV1 nach dem RFID-Prinzip Daten mit der ersten externen Einheit 200 austauschen, und über eine zweite Datenverbindung DV2 unter Verwendung eines WLAN-Netzwerks mit der zweiten externen Einheit 300.

Bei der ersten externen Einheit 200 kann es sich beispielsweise um ein Handgerät bzw. Mobilgerät einer Bedienperson handeln, das zur Konfiguration bzw. Parametrierung der Lastmesseinrichtung 100 nutzbar ist. Das Mobilgerät 200 kann beispielsweise ein Smartphone oder ein Tablet oder ein sonstiger tragbarer Computer sein, der über eine RFID-Schnittstelle verfügt, die kompatibel zu der ersten Schnittstelle 130a der Lastmesseinrichtung 100 ist. Die erste Datenverbindung DV1 kann dazu benutzt werden, Daten von dem Mobilgerät 200 zu der Lastmesseinrichtung 100 zu übertragen und/oder von der Lastmesseinrichtung 100 in dem Mobilgerät 200 zu empfangen.

Bei der zweiten externen Einheit 300 kann es sich beispielsweise um ein stationäres Gerät wie beispielsweise einen Personal Computer (PC) oder dergleichen handeln, der zumindest teilweise die Funktionalität einer Zentrale eines Lastmesssystem bereitstellt, und der über eine Netzwerkanbindung verfügt, die mittels der WLAN-Schnittstelle 130b eine Datenkommunikation mit der Lastmesseinrichtung 100 (und gegebenenfalls einer oder mehreren anderen, nicht in Figur 1 abgebildeten Lastmesseinrichtungen) ermöglicht. Die zweite Datenverbindung DV2 kann dazu benutzt werden, Daten von der Zentrale 300 zu der Lastmesseinrichtung 100 und/oder umgekehrt zu übertragen. Alternativ kann auch die zweite externe Einheit 300 ein mobiles Gerät umfassen.

Bei einer weiteren vorteilhaften Ausführungsform weist die Steuereinheit 140 der Lastmesseinrichtung 100 wenigstens eine Recheneinheit 142 auf, insbesondere einen Mikrocontroller oder dergleichen. Dies ermöglicht vorteilhaft eine effiziente Steuerung eines Betriebs der Lastmesseinrichtung 100, wobei bevorzugten Ausführungsformen zufolge insbesondere die erste Schnittstelle 130a und/oder die zweite Schnittstelle 130b und/oder die Messeinheit 120 mittels der Recheneinheit 142 steuerbar sind. Zudem kann die Recheneinheit 142 weiteren Ausführungsformen zufolge dazu ausgebildet sein, eine Auswertung der Verformungsmessgröße VMG auszuführen, insbesondere diese mit wenigstens einem vorgebbaren Schwellwert zu vergleichen bzw. hieraus eine Gewichtskraft bzw. Masse der angehängten Last SW ermitteln.

Des Weiteren ist es denkbar, bei manchen Ausführungsformen die Funktionalität der erfindungsgemäßen Lastmesseinrichtung 100 dadurch zu ändern bzw. zu erweitern, dass eine Software bzw. Firmware, die einen Betrieb der Recheneinheit 142 steuert, geändert bzw. erweitert wird. Insoweit kann zumindest ein Teil der Funktionalität der erfindungsgemäßen Lastmesseinrichtung bzw. ihres Betriebsverfahrens in Form der vorstehend genannten Software bzw. Firmware realisiert sein. Diese Software bzw. Firmware kann in an sich bekannter Weise in Form eines Computerprogramms gespeichert sein, sodass die Recheneinheit 142 darauf zugreifen kann.

Beispielsweise kann der Recheneinheit 142 bei einer weiteren Ausführungsform eine Speichereinrichtung (nicht in Figur 1 gezeigt) zugeordnet sein, die beispielsweise einen Arbeitsspeicher (RAM, random access memory) und/oder einen Festwertspeicher (ROM, read only memory) und/oder andere flüchtige bzw. nichtflüchtige Speicher (beispielsweise FLASH-EEPROM) oder beliebige Kombinationen hieraus aufweist. Bei manchen Ausführungsformen kann die Recheneinheit 142 beispielsweise als Mikrocontroller mit integrierter Speichereinrichtung ausgebildet sein.

Bei einer weiteren vorteilhaften Ausführungsform weist die Lastmesseinrichtung 100 eine aufladbare elektrische Energieversorgungseinrichtung 160 auf. Genauer gesagt kann die Energieversorgungseinrichtung 160 wenigstens einen (wieder) aufladbaren elektrischen Energiespeicher aufweisen. Die Energieversorgungseinrichtung 160 kann beispielsweise wenigstens einen Akkumulator und/oder wenigstens einen Kondensator, insbesondere wenigstens einen Doppelschichtkondensator ("Ultracap") oder beliebige Kombinationen hieraus aufweisen.

Bei einer weiteren Ausführungsform weist die Lastmesseinrichtung 100 eine Ladeeinrichtung 162 zum induktiven Aufladen der Energieversorgungseinrichtung bzw. 160 darin vorgesehener elektrische Energiespeicher auf, vergleiche den Blockpfeil Ein Figur 1. Dadurch ist ein besonders einfaches und effizientes Aufladen ermöglicht. Beispielsweise kann die Lastmesseinrichtung 100 bei Nichtgebrauch in eine Ladevorrichtung zum induktiven Aufladen eingelegt werden. Alternativ oder ergänzend kann auch eine Ladeschnittstelle mit elektrischen Kontakten (galvanische Verbindung) vorgesehen sein.

Bei einer weiteren Ausführungsform weist die Lastmesseinrichtung 100 wenigstens eine (optionale) optische Signalisiereinrichtung 170 auf, die insbesondere zur Ausgabe wenigstens eines einen Betriebszustand wenigstens einer Komponente 120, 130a, 130b, 140, 160, .. der Lastmesseinrichtung 100 charakterisierenden optischen Signals OS1 ausgebildet ist. Dadurch kann ein Betriebszustand der Lastmesseinrichtung 100 bzw. ihrer betreffenden Komponente 120, 130a, 130b, 140, 160, .. vorteilhaft z.B. in der unmittelbaren Umgebung der Lastmesseinrichtung 100 visuell wahrgenommen werden, beispielsweise durch eine Bedienperson, die für den Betrieb der Lastmesseinrichtung 100 zuständig ist.

Alternativ oder ergänzend kann der vorstehend genannte Betriebszustand wie vorstehend ebenfalls bereits beschrieben über eine der Schnittstellen 130a, 130b, insbesondere die zweite Schnittstelle 130b, besonders bevorzugt über eine WLAN-Schnittstelle 130b, an eine externe Einheit 300 übertragen werden.

Die optische Signalisiereinrichtung 170 weist bei bevorzugten Ausführungsformen wenigstens eine Halbleiterlichtquelle, insbesondere eine Licht emittierende Diode (Leuchtdiode, LED) auf. Besonders bevorzugt kann die optische Signalisiereinrichtung 170 auch eine Mehrzahl von LEDs aufweisen, die beispielsweise auch Licht unterschiedlicher Farben (zum Beispiel rot, gelb, grün) abgeben können.

Beispielsweise kann bei einer Ausführungsform ein aktueller Wert der von der Lastmesseinrichtung 100 bzw. ihrer Messeinheit 120 erfassten Verformungsmessgröße VMG mittels der optischen Signalisiereinrichtung 170 visuell signalisiert werden, beispielsweise nach Art eines VU-Meters (also analog zu einem Aussteuerungsmessgerät aus der Tontechnik), wobei in Abhängigkeit des aktuellen Werts der Verformungsmessgröße VMG eine entsprechende Anzahl einzelner Leuchtdioden aktiviert wird, wobei die einzelnen Leuchtdioden auch unterschiedliche Farben aufweisen können. Bei manchen Ausführungsformen ist auch denkbar, eine oder mehrere Leuchtdioden bzw. die gesamte Signalisiereinrichtung 170 beispielsweise periodisch zu aktivieren und zu deaktivieren, um ein oder mehrere Blinksignale zu erzeugen. Auf diese Weise kann insbesondere ein Überlastzustand visuell gut wahrnehmbar signalisiert werden, bei dem eine aktuell erfasste Verformungsmessgröße VMG einen vorgebbaren Schwellwert überschreitet, beispielsweise weil eine mit der Lastmesseinrichtung 100, 100a verbundene Last SW (Fig. 1) eine größere als die beispielsweise per Konfiguration vorgegebene Kraft auf das Kraftübertragungselement 110 ausübt.

Alternativ oder ergänzend zu einer optischen Signalisiereinrichtung 170 kann auch wenigstens eine akustische Signalisiereinrichtung (nicht gezeigt) vorgesehen sein, beispielsweise aufweisend einen Piezo-Signalgeber, der zur Ausgabe von ein oder mehrere Betriebszustände bzw. Betriebsarten der Lastmesseinrichtung 100 charakterisierender akustischer Signale ausgebildet ist.

Figur 2 zeigt schematisch ein Blockdiagramm einer weiteren Ausführungsform 100a der erfindungsgemäßen Lastmesseinrichtung. Die Lastmesseinrichtung 100a besitzt einen zu der Konfiguration 100 gemäß Figur 1 ähnlichen Aufbau (dessen Details aus Gründen der Klarheit nicht alle in Figur 2 abgebildet sind) und weist ergänzend einen lokalen Konfigurationsspeicher 150a zur zumindest zeitweisen Speicherung von Konfigurationsdaten auf. Der lokale Konfigurationsspeicher 150a kann bei bevorzugten Ausführungsformen beispielsweise Bestandteil der Speichereinrichtung 150 der Recheneinheit 142 sein. Die Lastmesseinrichtung 100 gemäß Figur 1 kann ebenfalls über eine derartige Speichereinrichtung 150 verfügen.

Die Lastmesseinrichtung 100a gemäß Figur 2 ist dazu ausgebildet, mittels der ersten Schnittstelle 130a erste Konfigurationsdaten cfg1 von der ersten externen Einheit 200 zu empfangen. Dadurch ist vorteilhaft die Möglichkeit gegeben, Konfigurationsdaten cfg1 bzw. sonstige Daten von der externen Einheit 200, beispielsweise einem Mobilgerät bzw. Handgerät, das einer Bedienperson zugeordnet ist, an die Lastmesseinrichtung 100a zu übertragen, besonders bevorzugt mittels einer als RFID-Schnittstelle ausgebildeten ersten Schnittstelle 130a.

Beispielsweise kann bei manchen Ausführungsformen auf diese Weise eine sogenannte Grundkonfiguration CFG an die Lastmesseinrichtung 100a übertragen werden, die beispielsweise in dem bereits beschriebenen Konfigurationsspeicher 150a zumindest zeitweise speicherbar ist. Bevorzugt wird die Grundkonfiguration CFG in einem nichtflüchtigen Speicher der Lastmesseinrichtung 100a bzw. ihrer Recheneinheit abgelegt.

Bei weiteren bevorzugten Ausführungsformen kann die Grundkonfiguration CFG wenigstens einen der folgenden Werte umfassen: einen oder mehrere Parameter, die einen Betrieb der Lastmesseinrichtung 100a steuern, insbesondere Parameter, die unterschiedliche mögliche Betriebsarten der Lastmesseinrichtung 100a charakterisieren bzw. die Zustandsübergänge zwischen unterschiedlichen Betriebsarten charakterisieren, einen oder mehrere Schwellwerte für eine Auswertung der Verformungsmessgröße VMG, Zugangsdaten, die eine geschützte Datenverbindung DV2 (Fig. 1) der Lastmesseinrichtung über die zweite Schnittstelle 130b mit der wenigstens einen zweiten externen Einheit 300 ermöglichen (beispielsweise WLAN-Zugangsdaten im Falle der Ausbildung der zweiten Schnittstelle 130b als WLAN-Schnittstelle).

Bei einer bevorzugten Ausführungsform kann die Grundkonfiguration in Form einer oder mehrerer Initialisierungsdateien ("*.ini"-Datei) vorliegen, was beispielsweise eine einfache Verwaltung der betreffenden Konfigurationen für ein oder mehrere Lastmesseinrichtungen ermöglicht. Insbesondere können dadurch auch auf einem zentralen System 300 (z.B. Zentrale eines Lastmesssystems), einfach unterschiedliche Konfigurationen für verschiedene Lastmesseinrichtungen vorgehalten werden.

Bei einer weiteren Ausführungsform ist die Lastmesseinrichtung 100a dazu ausgebildet, Daten, insbesondere Konfigurationsdaten cfg2 über die erste Schnittstelle 130a an die erste externe Einheit 200 zu übertragen. Dadurch kann beispielsweise ein Mobilgerät 200 eine aktuelle Konfiguration cfg2 der Lastmesseinrichtung 100a auslesen, beispielsweise um diese zu überprüfen oder zu modifizieren.

Bei einer weiteren vorteilhaften Ausführungsform ist die Lastmesseinrichtung 100a (Fig. 2) dazu ausgebildet, zumindest zeitweise über die zweite Schnittstelle 130b, also per "WLAN", eine Datenverbindung zu der zweiten externen Einheit 300 aufzubauen, wobei die Lastmesseinrichtung 100a insbesondere dazu ausgebildet ist, wenigstens eine erste einen Betriebszustand der Lastmesseinrichtung 100a charakterisierende Betriebsinformation über die zweite Schnittstelle 130b an die zweite externe Einheit 300 zu senden. Die Betriebsinformation kann beispielsweise einen aktuell eingenommenen Betriebszustand bzw. eine Betriebsart der Lastmesseinrichtung 100a signalisieren. Beispielsweise kann die Betriebsinformation einen Alarmzustand bzw. einer Alarmbetriebsart signalisieren, insbesondere dann, wenn eine Auswertung einer erfassten Verformungsmessgröße VMG ergeben hat, dass ein vorgebbarer erster Schwellwert überschritten worden ist.

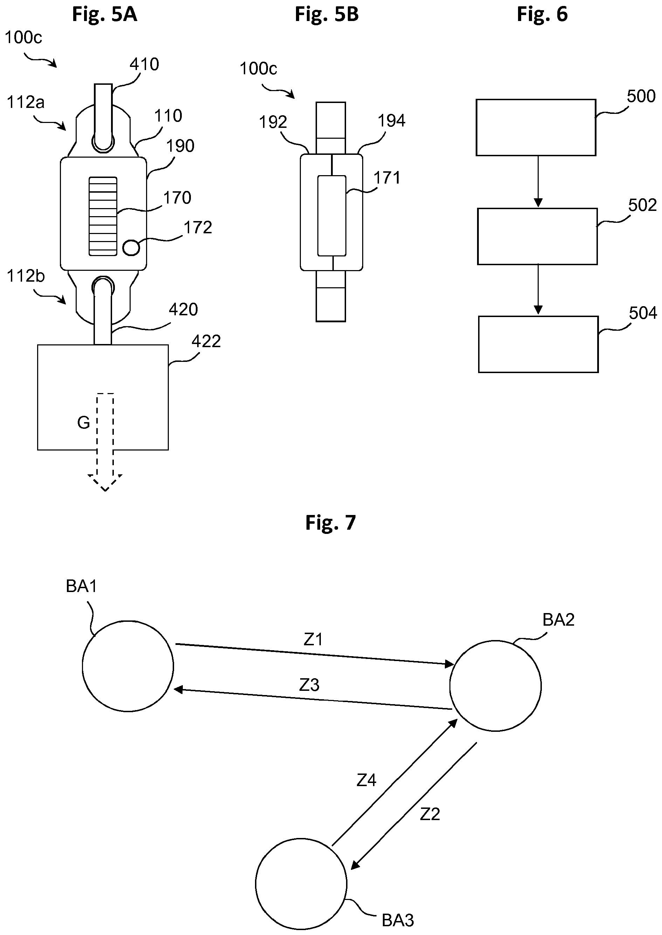

Bei einer weiteren vorteilhaften Ausführungsform ist die Steuereinheit 140 (Fig. 1, 2) dazu ausgebildet, zumindest zeitweise wenigstens eine der schematisch in Figur 7 abgebildeten und nachfolgend näher beschriebenen Betriebsarten BA1, BA2, BA3 einzunehmen:
a) eine erste Betriebsart BA1 (Fig. 7), insbesondere Bereitschaftsbetriebsart ("standby")
b) eine zweite Betriebsart BA2 ("live"), insbesondere Live-Betriebsart,
c) eine dritte Betriebsart BA3 ("Alarm"), insbesondere Alarmbetriebsart.

Bei einer Ausführungsform dient die Bereitschaftsbetriebsart BA1 insbesondere dazu, periodisch die Verformungsmessgröße VMG zu ermitteln und gegebenenfalls zu bewerten, wodurch eine Änderung an einem Belastungszustand der Lastmesseinrichtung feststellbar ist. Bei einer bevorzugten Ausführungsform ist die Steuereinheit 140 beispielsweise dazu ausgebildet, in der ersten Betriebsart BA1 die Verformungsmessgröße VMG (Fig. 1), periodisch (mit einer ersten Periodendauer, zum Beispiel alle 10 Minuten) auszuwerten. Optional kann in der ersten Betriebsart BA1 auch ein Vergleich eines Werts der Verformungsmessgröße VMG mit einem ersten Schwellwert erfolgen (vorzugsweise mit derselben ersten Periodendauer). Mit anderen Worten ermittelt die Lastmesseinrichtung bzw. ihre Steuereinheit 140 in der Bereitschaftsbetriebsart BA1 in vergleichsweise großen zeitlichen Abständen einen aktuellen Belastungszustand durch Auswertung der Verformungsmessgröße VMG.

Bei einer besonders bevorzugten Ausführungsform kann die Recheneinheit 142 (Fig. 1) der Steuereinheit 140 für die restliche erste Periodendauer, also während nicht gerade die Verformungsmessgröße VMG ermittelt bzw. mit dem ersten Schwellwert verglichen wird, in einen Energiesparzustand versetzt werden, um die elektrische Leistungsaufnahme zu reduzieren, wodurch sich die Betriebsdauer der Lastmesseinrichtung vorteilhaft erhöht. Bei einer Ausführungsform kann die Recheneinheit 142 beispielsweise alle 10 Minuten aus diesem Energiesparzustand "aufgeweckt", also aktiviert, werden, um einen aktuellen Wert der Verformungsmessgröße VMG zu ermitteln und den vorstehend beschriebenen Vergleich mit dem ersten Schwellwert auszuführen.

Bei manchen Ausführungsformen kann auch eine Eingabeschnittstelle bei der Lastmesseinrichtung vorgesehen sein, beispielsweise ein Taster (nicht gezeigt), der insbesondere auf einen Eingang der Recheneinheit 142 wie beispielsweise einen Digitaleingang, wirken kann. Dadurch ist vorteilhaft die Möglichkeit gegeben, die Recheneinheit 142 bzw. die Steuereinheit 140 manuell zu starten bzw. aus dem Energiesparzustand heraus aufzuwecken, beispielsweise um eine aktuelle Messung der Verformungsmessgröße VMG auszulösen.

Bei weiteren Ausführungsformen kann ein derartiger Taster beispielsweise auch dazu genutzt werden, manuell die visuelle Signalisierung einer Betriebsgröße der Lastmesseinrichtung beispielsweise mittels der optischen signalisieren Einheit 170 anzustoßen, zum Beispiel die Ausgabe eines aktuellen Ladezustands eines elektrischen Energiespeichers einer bzw. der elektrischen Energieversorgungseinrichtung.

Bei einer Ausführungsform kann die Ermittlung der Verformungsmessgröße VMG derart erfolgen, dass dem entsprechenden Messwert beispielsweise direkt eine entsprechende Kraft zugeordnet wird. Bei dieser Kraft handelt es sich um die Zugkraft, die während eines Betriebs der Lastmesseinrichtung 100 (Fig. 1) auf ihr Kraftübertragungselement 110 wirkt. Diese entspricht beispielsweise im Wesentlichen einer Gewichtskraft der angehängten Last SW.

Bei einer weiteren Ausführungsform kann die Lastmesseinrichtung 100 bzw. ihre Steuereinheit 140 die vorstehend genannte Kraft mit einer einstellbaren Kraftobergrenze bzw. Lastobergrenze vergleichen. Die einstellbare Kraftobergrenze wird beispielsweise durch den vorstehend bereits beschriebenen ersten Schwellwert charakterisiert und kann beispielhaft maximal zu etwa 200 kg bzw. 2000 N (Newton) vorgegeben werden. Bei anderen Ausführungsformen sind andere (größere oder kleinere) Werte möglich.

Ferner kann bei weiteren Ausführungsformen eine wie vorstehend beschrieben ermittelte Kraft zumindest zeitweise gespeichert werden.

Bei weiteren Ausführungsformen kann eine wie vorstehend beschrieben ermittelte Kraft verglichen werden mit einer zuvor gemessenen bzw. zumindest zeitweise gespeicherten Kraft.

Die zweite Betriebsart BA2, die auch als "Live-Betriebsart" bezeichnet wird, dient vorteilhaft dazu, die Verformungsmessgröße VMG, vorzugsweise periodisch (mit einer zweiten Periodendauer), auszuwerten, insbesondere mit einem zweiten Schwellwert (der z.B. gleich dem ersten Schwellwert oder verschieden hiervon ist) zu vergleichen. Im Gegensatz zu der ersten Betriebsart ist die zweite Periodendauer kleiner als die erste Periodendauer und beträgt beispielsweise etwa 1 Sekunde. Mit anderen Worten kann vorgesehen sein, dass die Verformungsmessgröße VMG in der zweiten Betriebsart BA2 etwa im Sekundentakt, also nahezu in Echtzeit, bezogen auf das menschliche Wahrnehmungsvermögen, ermittelt und mit dem zweiten Schwellwert verglichen wird.

Ferner kann bei weiteren Ausführungsformen in der zweiten Betriebsart BA2 eine wie vorstehend beschrieben ermittelte Kraft zumindest zeitweise gespeichert werden.

Bei weiteren Ausführungsformen kann in der zweiten Betriebsart BA2 eine wie vorstehend beschrieben ermittelte Kraft verglichen werden mit einer zuvor gemessenen bzw. zumindest zeitweise gespeicherten Kraft.

Ferner kann bei weiteren Ausführungsformen in der zweiten Betriebsart BA2 eine wie vorstehend beschrieben ermittelte Kraft zumindest zeitweise gespeichert werden.

Weiter kann bei manchen Ausführungsformen vorgesehen sein, dass in der zweiten Betriebsart BA2 die ermittelte Kraft visuell signalisiert wird, beispielsweise durch Ausgabe eines entsprechenden optischen Signals OS1 (Fig. 1) mittels der optischen Signalisiereinrichtung 170. Besonders bevorzugt wird die ermittelte Kraft mit vergleichsweise kleiner Periodizität, insbesondere in Echtzeit, visuell signalisiert, beispielsweise etwa jede Sekunde, entsprechend der zweiten Periodendauer. Dies ermöglicht vorteilhaft eine zeitnahe Anzeige der auf die Lastmesseinrichtung einwirkenden Kraft, sodass bei dem Einbau der Lastmesseinrichtung in ein Zielsystem unmittelbar beurteilt werden kann, ob die an der Lastmesseinrichtung 100 angebrachte Last SW (Fig. 1) gegebenenfalls eine unzulässig hohe Gewichtskraft in die Lastmesseinrichtung 100 bzw. ihr Kraftübertragungselement 110 einleitet.

Die vorstehend beschriebene Kraftobergrenze kann beispielsweise als Teil der ersten Konfigurationsdaten cfg1 im Rahmen eines Konfigurationsvorgangs unter Verwendung des Mobilgeräts 200 (Fig. 2) über die erste Schnittstelle 130a an die Steuereinheit 140 gesendet werden. Beispielsweise kann somit der Lastmesseinrichtung per Konfiguration eine Kraftobergrenze von 1000 N (Newton) (entsprechend etwa 100 kg) vorgegeben werden, sodass die auf diese Weise konfigurierte Lastmesseinrichtung den entsprechenden Wert für die Kraftobergrenze fortan bei ihrem Betrieb, insbesondere in der ersten Betriebsart BA1 und der zweiten Betriebsart BA2, berücksichtigen kann.

Die dritte Betriebsart BA3 (Fig. 7) repräsentiert eine auch als Alarmbetriebsart bezeichnete Betriebsart, wobei insbesondere die Steuereinheit 140 (Fig. 1) dazu ausgebildet ist, wenigstens eine zweite einen Betriebszustand der Lastmesseinrichtung charakterisierende Betriebsinformation (z.B. ein Alarmsignal) an die zweite externe Einheit 300 (Fig. 1) zu senden und/oder ein optisches Signal OS1 (Fig, 1) auszugeben, beispielsweise mittels der optional vorhandenen optischen Signalisiereinrichtung 170.

Besonders vorteilhaft kann die optische Signalisiereinrichtung 170 eine rote Leuchtdiode als Warnleuchte aufweisen, welche in der Alarmbetriebsart BA3, und vorzugsweise nur in der Alarmbetriebsart BA3, aktiviert wird. Bei einer bevorzugten Ausführungsform weist die rote Leuchtdiode einen Abstrahlwinkel von wenigstens etwa 100°, insbesondere wenigstens etwa 120°, auf, um eine gute visuelle Wahrnehmbarkeit auch aus unterschiedlichen Blickrichtungen sicherzustellen. Bei manchen Ausführungsformen ist auch denkbar, die Warnleuchte so auszubilden, dass sie nahezu in alle Raumrichtungen abstrahlt ("rundum-LED").

Bei einer bevorzugten Ausführungsform ist vorgesehen, dass die Lastmesseinrichtung bzw. ihre Steuereinheit 140 in der dritten Betriebsart BA3, also in einem Alarmzustand, und bevorzugt nur in dem Alarmzustand, die zweite Schnittstelle 130b (Fig. 1) aktiviert. Die Steuereinheit 140 bzw. die zweite Schnittstelle 130b kann bevorzugt dazu ausgebildet sein, über die WLAN Schnittstelle 130b eine Datenverbindung zu einem verfügbaren Drahtlosnetzwerk (WLAN) und damit beispielsweise zu der zweiten externen Einheit 300 aufzubauen. Außerhalb der dritten Betriebsart BA3 kann die zweite Schnittstelle 130b deaktiviert sein, um elektrische Energie zu sparen.

Bei einer weiteren Ausführungsform ist vorgesehen, dass nach einem erfolgreichen Verbindungsaufbau über die WLAN-Schnittstelle 130b wenigstens eine der nachfolgenden Informationen an die zweite externe Einheit 300 gesendet werden, und dass nach dem Versenden die WLAN-Schnittstelle 130b deaktiviert wird: Verformungsmessgröße VMG, aus der Verformungsmessgröße VMG abgeleitete Kraft, aktuelle Betriebsart, Daten des Einsatzortes bzw. Zielsystems (Standort, Datum, Uhrzeit, Informationen zu einem Betreiber des Zielsystems ("Messe"), Hallennummer, Standnummer), Ladezustand bzw. Betriebszustand der Energieversorgungseinrichtung 160.

Bei einer Ausführungsform ist vorgesehen, dass die Alarmbetriebsart BA3 dann verlassen wird, wenn die Lastmesseinrichtung ein entsprechendes Kommando, insbesondere einen Rücksetzbefehl, von dem Mobilgerät 200 empfängt. Dies kann beispielsweise dadurch erfolgen, dass eine Bedienperson mit einem Mobilgerät 200 den Einbauort der betreffenden Lastmesseinrichtung aufsucht, eine RFID-Datenverbindung DV1 (Fig. 1) mit dieser über die erste Schnittstelle 130a herstellt, und das Kommando zum Beenden der Alarmbetriebsart BA3 sendet. Alternativ oder ergänzend kann vorgesehen sein, dass ein Taster (nicht gezeigt) oder ein vergleichbares Eingabeelement, welches an der Lastmesseinrichtung, insbesondere im Bereich eines Gehäuses, vorgesehen ist, durch eine Bedienperson betätigt werden muss, um die Alarmbetriebsart BA3 zu verlassen.

Bei einer bevorzugten Ausführungsform wechselt die Lastmesseinrichtung 100 bzw. ihre Steuereinheit 140 nach den vorstehend genannten Maßnahmen aus dem Alarmzustand BA3 in den Bereitschaftszustand BA1. Dieser Zustandsübergang ist durch den Pfeil Z4 in Figur 7 symbolisiert. Alternativ kann auch ein Zustandsübergang aus der Alarmbetriebsart BA3 direkt in die erste Betriebsart BA1 erfolgen. Dies ist nicht in Figur 7 abgebildet.

Bei einer Ausführungsform wechselt die Steuereinheit 140 von der ersten Betriebsart BA1 in die zweite Betriebsart BA2, wenn a) die Verformungsmessgröße VMG einen ersten Schwellwert überschreitet, b) und/oder wenn die Verformungsmessgröße VMG den ersten Schwellwert nicht überschreitet, aber von einem in einem vorangehenden Messzyklus ermittelten Wert (der zuvor gespeichert worden ist) für die Verformungsmessgröße abweicht, mithin eine Änderung der Verformungsmessgröße bzw. der durch sie charakterisierten Kraft vorliegt. Der betreffende Zustandsübergang ist in Figur 7 durch den Pfeil Z1 symbolisiert.

Bei einer weiteren Ausführungsform wechselt die Lastmesseinrichtung bzw. ihre Steuereinheit 140 von der zweiten Betriebsart BA2 in die dritte Betriebsart BA3, wenn die Verformungsmessgröße VMG einen vorgebbaren zweiten Schwellwert überschreitet, insbesondere, wenn die Verformungsmessgröße VMG über einen vorgebbaren Überwachungszeitraum ("Alarmwartezeit") den vorgebbaren zweiten Schwellwert überschreitet, vergleiche den Pfeil Z2.

Bei weiteren Ausführungsformen ist ein Zustandsübergang von der zweiten Betriebsart BA2 zu der ersten Betriebsart BA1, vergleiche Pfeil Z3, beispielweise dann vorgesehen, wenn für einen vorgebbaren Zeitraum keine Änderung der Verformungsmessgröße VMG feststellbar ist und gleichzeitig die Verformungsmessgröße VMG den ersten Schwellwert nicht überschreitet.

Bei weiteren Ausführungsform ist vorgesehen, dass die zweite Betriebsart BA2 beibehalten wird, solange die Verformungsmessgröße VMG sich ändert, mithin von zuvor erfassten Werten abweicht. Dadurch ist sichergestellt, dass bei veränderlicher Verformungsmessgröße VMG die zweite Betriebsart BA2 mit ihrer vergleichsweise kurzen zweiten Periodendauer für die Ermittlung der Verformungsmessgröße VMG beibehalten wird, und nicht etwa übergegangen wird in die erste Betriebsart BA1, die zugunsten einer elektrischen Energieeinsparung bevorzugten Ausführungsformen zufolge die gegebenenfalls wesentlich größere erste Periodendauer nutzt.

Bei weiteren bevorzugten Ausführungsformen kann die Lastmesseinrichtung bzw. ihre Steuereinheit 140 zeitlich aufeinanderfolgend jede der vorstehend genannten Betriebsarten einnehmen, weist also insgesamt wenigstens diese drei möglichen Betriebsarten auf. Es versteht sich, dass bei weiteren Ausführungsformen auch weitere Betriebsarten vorgesehen sein können.

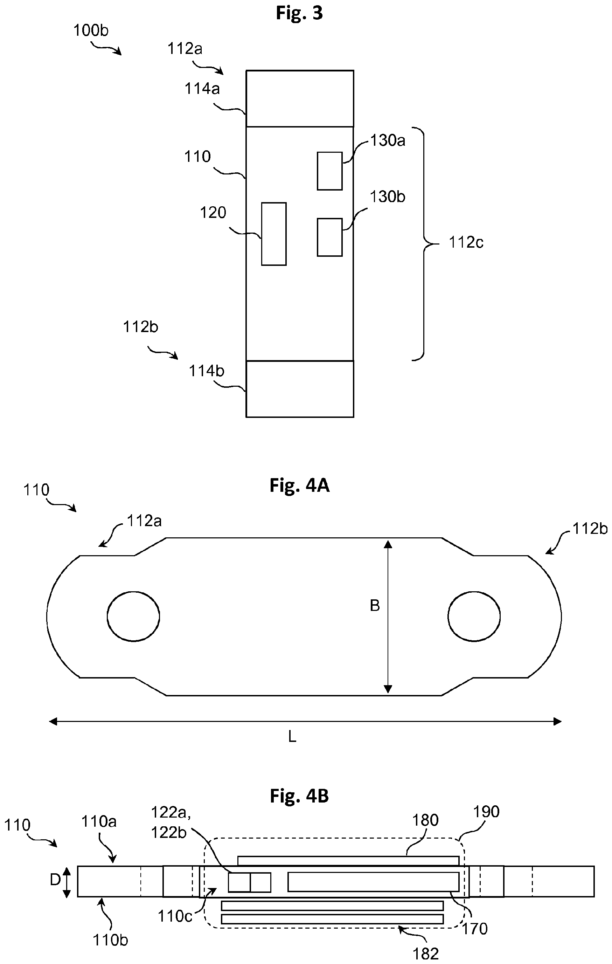

Figur 3 zeigt schematisch eine Draufsicht auf eine weitere Ausführungsform 100b der erfindungsgemäßen Lastmesseinrichtung. Erkennbar ist das Kraftübertragungselement 110, das vorliegend eine im wesentlichen rechteckförmige Grundform mit einem ersten axialen Endbereich 112a und einem zweiten axialen Endbereich 112b aufweist, wobei in dem ersten axialen Endbereich 112a erste Befestigungsmittel 114a zum Herstellen einer vorzugsweise formschlüssigen Verbindung mit einer ersten Komponente (beispielsweise einem Aufhängepunkt AP, vergleiche Figur 1) vorgesehen sind, und wobei in dem zweiten axialen Endbereich 112b zweite Befestigungsmittel 114b zum Herstellen einer, vorzugsweise formschlüssigen, Verbindung mit einer zweiten externen Komponente (beispielsweise einer Last SW, Fig. 1) vorgesehen sind.

Besonders bevorzugt ist die Grundform des Kraftübertragungselements 110 einer Ausführungsform zufolge im Wesentlichen länglich, weist also eine Länge (vertikal in Figur 3) und eine Breite (horizontal in Figur 3) auf, wobei die Länge größer als die zweifache Breite ist.

Die weiteren Komponenten der Lastmesseinrichtung 100b, von denen in Figur 3 der Übersichtlichkeit halber nur einige (120, 130a, 130b) gezeigt sind, sind bevorzugt in einem axial mittleren Bereich 112c des Kraftübertragungselements 110 angeordnet, wodurch sich eine klein bauende Konfiguration ergibt und gleichzeitig eine gute Zugänglichkeit der Befestigungsmittel 114a, 114b gegeben ist.

Figur 4A zeigt schematisch eine Draufsicht auf ein Kraftübertragungselement 110 gemäß einer Ausführungsform, und Figur 4B zeigt schematisch eine Seitenansicht dieses Kraftübertragungselements 110 aus Figur 4A.

Bei einer besonders bevorzugten Ausführungsform beträgt eine Länge L (Fig. 4A) des Kraftübertragungselements 110 zwischen etwa 8 cm (Zentimeter) und etwa 15 cm, insbesondere zwischen etwa 10 cm und etwa 12 cm. Dadurch ist eine besonders klein bauende Konfiguration gegeben, die sich nur unwesentlich auf das Zielsystem, beispielsweise einen zu erstellenden Bühnenaufbau mit abgehängten Lasten, auswirkt. Insbesondere kann die Lastmesseinrichtung gemäß der Ausführungsformen daher auch vorteilhaft bei solchen Aufbauten verwendet werden, bei denen eine für die Aufhängung verfügbare Höhe, beispielsweise Deckenhöhe, vergleichsweise gering ist.

Bei einer weiteren besonders bevorzugten Ausführungsform beträgt eine Breite B (insbesondere eine maximale Breite) des Kraftübertragungselements 110 zwischen etwa 2 cm und etwa 5 cm, besonders bevorzugt zwischen etwa 2,9 cm und etwa 5,4 cm.

Bei einer Ausführungsform umfassen die ersten und/oder zweiten Befestigungsmittel Öffnungen, insbesondere Bohrungen oder sonstige Ausschnitte in den jeweiligen Bereichen 112a, 112b des Kraftübertragungselements. Vorliegend sind die in Figur 4A nicht näher bezeichneten Öffnungen als Bohrungen ausgebildet und weisen einen Durchmesser von etwa 12 mm auf. Beispielsweise können die mit der Lastmesseinrichtung zu verbindenden Komponenten AP, SW (Fig. 1) mittels Karabinern und/oder Schäkeln und/oder sonstigen an sich bekannten Befestigungs- bzw. Sicherungsmitteln verbunden werden.

Bei einer weiteren vorteilhaften Ausführungsform ist das Kraftübertragungselement 110 im Wesentlichen plattenförmig ausgebildet, vorzugsweise einstückig. Unter "plattenförmig" wird vorliegend verstanden, dass eine Dicke D (Fig. 4B) des Materials des Kraftübertragungselements 110 über die gesamte Breite B und/oder Länge L (Fig. 4A) im Wesentlichen konstant und wesentlich kleiner als seine Breite B und/oder wesentlich kleiner als seine Länge L ist (also D<B und/oder D<L). Besonders bevorzugt ist die Dicke D des Kraftübertragungselements 110 kleiner als 30 % (Prozent) seiner maximalen Breite B. Bei einer besonders bevorzugten Ausführungsform beträgt eine Dicke D des Kraftübertragungselements 110 zwischen etwa 6 mm und etwa 10 mm, vorzugsweise etwa 8 mm.

Bei einer besonders bevorzugten Ausführungsform ist das Kraftübertragungselement 110 durch ein Blechelement, insbesondere Stahlblech, gebildet. Besonders bevorzugt wird das Kraftübertragungselement 110 mittels Laserschneidverfahren hergestellt, also aus einem Ausgangswerkstück herausgeschnitten, was eine besonders effiziente und kostengünstige Fertigung ermöglicht.

Bei einer weiteren besonders bevorzugten Ausführungsform weist die Lastmesseinrichtung bzw. ihr Kraftübertragungselement 110 einen Sicherheitsfaktor gegen Bruch von SF10 auf, wodurch vorteilhaft der Vorschrift DGUV17/18 der Deutschen gesetzlichen Unfallversicherung entsprochen wird.

Bei einer weiteren Ausführungsform ist vorgesehen, dass wenigstens eine erste Schaltungsträgerplatte 180 ("Platine"), vgl. Fig. 4B, auf einer ersten Oberfläche 110a des Kraftübertragungselements 110 angeordnet ist, wobei insbesondere wenigstens eine weitere Schaltungsträgerplatte 182 auf einer zweiten Oberfläche 110b des Kraftübertragungselements 110 angeordnet ist, die der ersten Oberfläche 110a gegenüberliegt. Dadurch ist vorteilhaft die Möglichkeit gegeben, ein oder mehrere elektronische Komponenten, beispielsweise eine Recheneinheit 142 (Fig. 1) der Steuereinheit 140 und/oder Halbleiterspeicher und/oder die optische Signalisiereinrichtung und/oder sonstige elektrische und/oder mechanische und/oder elektromechanische Komponenten dicht an dem Kraftübertragungselement 110 anzuordnen, wodurch sich eine besonders klein bauende Konfiguration ergibt.

Besonders vorteilhaft können bei manchen Ausführungsformen mehrere Platinen übereinander 182 angeordnet werden, wodurch weiterer Bauraum für die Vorsehung elektrischer und/oder elektromechanischer oder optoelektronischer Bauteile (z.B. LED) oder dergleichen bereitgestellt wird.

Besonders bevorzugt kann beispielsweise wenigstens eine Komponente der Steuereinheit 140 auf der wenigstens einen ersten Schaltungsträgerplatte 180 angeordnet sein, und es kann wenigstens eine Komponente der ersten und/oder zweiten Schnittstelle 130a, 130b auf der wenigstens einen weiteren Schaltungsträgerplatte 182 angeordnet sein. Besonders bevorzugt sind, z.B. im Falle einer gestapelten Konfiguration, bei der mehrere Platinen 182 übereinander angeordnet sind, gegebenenfalls die erste bzw. zweite Schnittstelle bzw. deren Antenne(n) enthaltende Platinen so angeordnet, dass sie möglichst weit entfernt von der Oberfläche 110a, 110b des Kraftübertragungselements 110 angeordnet sind, um eine Optimierung der Reichweite für die jeweilige Datenübertragung DV1, DV2 zu ermöglichen.

Bei einer weiteren vorteilhaften Ausführungsform ist wenigstens eine Komponente einer bzw. der optischen Signalisiereinrichtung 170 (Fig. 1) auf der wenigstens einen ersten Schaltungsträgerplatte 180 und/oder auf der wenigstens einen zweiten Schaltungsträgerplatte 182 angeordnet, wodurch eine besonders effiziente Anbindung der Signalisiereinrichtung 170, beispielsweise ihrer Leuchtdioden, an die Steuereinheit 140 und gleichzeitig eine mechanische Fixierung der Leuchtdioden in der Lastmesseinrichtung gegeben ist.

Bei weiteren Ausführungsformen weist die Messeinheit 120 wenigstens einen Dehnungsmessstreifen, bevorzugt jedoch zwei Dehnungsmessstreifen 122a, 122b (Fig. 4B) auf, wobei der bzw. die Dehnungsmessstreifen 122a, 122b insbesondere an einer Seitenfläche 110c des Kraftübertragungselements 110 angeordnet sind. Unter der Seitenfläche 110c wird hierbei eine Oberfläche des Kraftübertragungselements 110c verstanden, welche im Wesentlichen orthogonal zu ersten und zweiten Oberfläche des Kraftübertragungselements 110c. Bei der vorliegenden Ausführungsform gemäß Figur 4B beispielsweise liegt die Seitenfläche 110c in der Zeichenebene.

Bei einer weiteren vorteilhaften Ausführungsform weist die Lastmesseinrichtung ein Gehäuse 190 auf, das wenigstens einen axial mittleren Bereich 112c (Fig. 3) des Kraftübertragungselements 110 umgibt. Besonders bevorzugt sind die ein oder mehreren elektronischen bzw. optoelektronischen Komponenten (Steuereinheit 140, Recheneinheit 142, erste Schnittstelle 130a, zweite Schnittstelle 130b) von dem Gehäuse 190 bzw. seinen Komponenten umgeben und auf diese Weise vor Umgebungseinflüssen (Fremdkörper, Schmutz, Feuchtigkeit) geschützt, während bevorzugt die axialen Endbereiche 112a, 112b des Kraftübertragungselements 110 nicht von dem Gehäuse 190 bzw. seinen Komponenten umgeben sind und daher frei zugänglich sind für die bevorzugt formschlüssige Anbindung von externen Komponenten, wie beispielsweise Aufhängepunkten AP (Fig. 1) bzw. aufzuhängenden Lasten SW.

Bei einer weiteren vorteilhaften Ausführungsform weist das Gehäuse 190 wenigstens bereichsweise ein transluzentes oder transparentes Material auf, wodurch eine effiziente optische Signalisierung durch die optische Signalisiereinrichtung 170 durch das Gehäuse hindurch ermöglicht ist.

Figur 5A zeigt schematisch eine Lastmesseinrichtung 100c gemäß einer weiteren Ausführungsform, angeordnet in einem Zielsystem bestehend aus einem Aufhängepunkt 410 und einer Last 422, die mittels eines Schäkels 420 an dem in Fig. 5A unteren axialen Endbereich 112b angebracht ist. Auf diese Weise kann die Lastmesseinrichtung 100c dazu verwendet werden, eine Belastung des Aufhängepunkts 410, die insbesondere durch die Gewichtskraft G der Last 422 und des Schäkels 420 herrührt, zu erfassen.

Die Lastmesseinrichtung 100c weist eine optische Signalisiereinrichtung 170 auf, die vorliegend durch eine Vielzahl nebeneinander angeordneter Leuchtdioden gebildet ist, welche aus Gründen der Übersichtlichkeit nicht einzeln bezeichnet sind. Beispielsweise ist eine erste Anzahl von grünen Leuchtdioden vorgesehen, eine zweite, kleinere Anzahl von gelben Leuchtdioden, und eine dritte Anzahl von roten Leuchtdioden, welche in etwa der Anzahl der gelben Leuchtdioden entspricht oder geringfügig kleiner ist. Auf diese Weise kann die Signalisiereinrichtung 170 nach Art eines VU-Meters dazu verwendet werden, Betriebsparameter der Lastmesseinrichtung 100 c visuell zu signalisieren, beispielsweise eine aktuelle Belastung, charakterisiert durch die Verformungsmessgröße VMG bzw. die Gewichtskraft G der Last 422.

Alternativ bzw. im zeitlichen Wechsel sind bei weiteren Ausführungsformen auch andere Betriebsgrößen der Lastmesseinrichtung 100c durch die Signalisiereinrichtung 170 anzeigbar, beispielsweise ein Ladezustand der elektrischen Energieversorgungseinrichtung 160 (Fig. 1). Ein Wechsel zwischen den unterschiedlichen Anzeigezuständen der Signalisiereinrichtung 170 kann beispielsweise automatisch (Zeitmultiplex) und/oder durch manuelles Betätigen eines im Bereich des Gehäuses 190 vorgesehenen Tasters 172 ausgelöst werden, oder auch durch das Übermitteln entsprechender Steuerbefehle mittels eines Mobilgeräts 200 über die RFID-Schnittstelle 130a (Figur 1).

Bei einer weiteren vorteilhaften Ausführungsform weist das Gehäuse 190 der Lastmesseinrichtung 100c wenigstens zwei Halbschalen 192, 194 auf, vergleiche die Seitenansicht gemäß Figur 5B. Eine erste Halbschale 192 ist einer ersten Oberfläche 110a (Fig. 4B) des Kraftübertragungselements 110 zugeordnet, und eine zweite Halbschale 194 des Gehäuses 190 ist einer zweiten Oberfläche 110b (Fig. 4B) des Kraftübertragungselements 110 zugeordnet, wodurch sich eine besonders einfache und wenig komplexe Konfiguration ergibt, die insbesondere eine effiziente und kostengünstige Fertigung ermöglicht. Gleichzeitig werden durch die beiden Halbschalen 192, 194 jeweils zusammen mit einer entsprechenden Oberfläche 110a, 110b des Kraftübertragungselements 110 vorteilhaft jeweilige Gehäusekammern realisiert, die zur Aufnahme von Komponenten der Lastmesseinrichtung, beispielsweise der Steuereinheit 140 bzw. entsprechender Schaltungsträgerplatten 180, 182 (Fig. 4B), dienen.

Bei einer weiteren Ausführungsform kann auch eine seitliche Oberfläche des Gehäuses 190 eine, vorliegend zweite, optische Signalisiereinrichtung 171 aufweisen, vgl. Fig 5B. Andere Seitenflächen bzw. sonstige Flächen des Gehäuses 190 (Fig. 5A) können bei weiteren Ausführungsformen ebenso gegebenenfalls weitere Signalisiereinrichtungen aufweisen.

Figur 6 zeigt schematisch ein vereinfachtes Flussdiagramm einer Ausführungsform eines erfindungsgemäßen Betriebsverfahrens. In einem ersten Schritt 500 ermittelt die Lastmesseinrichtung mittels ihrer Messeinheit 120 wenigstens einen Wert der vorstehend bereits beschriebenen Verformungsmessgröße VMG. In einem weiteren Schritt 502 tauscht die Lastmesseinrichtung mittels der ersten Schnittstelle 130a (Fig. 1) Daten mit der wenigstens einen externen Einheit 200 aus, und in einem weiteren Schritt 504 (Fig. 6) tauscht die Lastmesseinrichtung mittels der zweiten Schnittstelle 130b Daten mit der wenigstens einen zweiten externen Einheit 300 aus. Eine andere zeitliche Reihenfolge bzw. eine zumindest teilweise zeitlich überlappende bzw. gleichzeitige Ausführung wenigstens zweier der vorstehend genannten Schritte 500, 502, 504 ist weiteren Ausführungsformen zufolge ebenfalls denkbar.

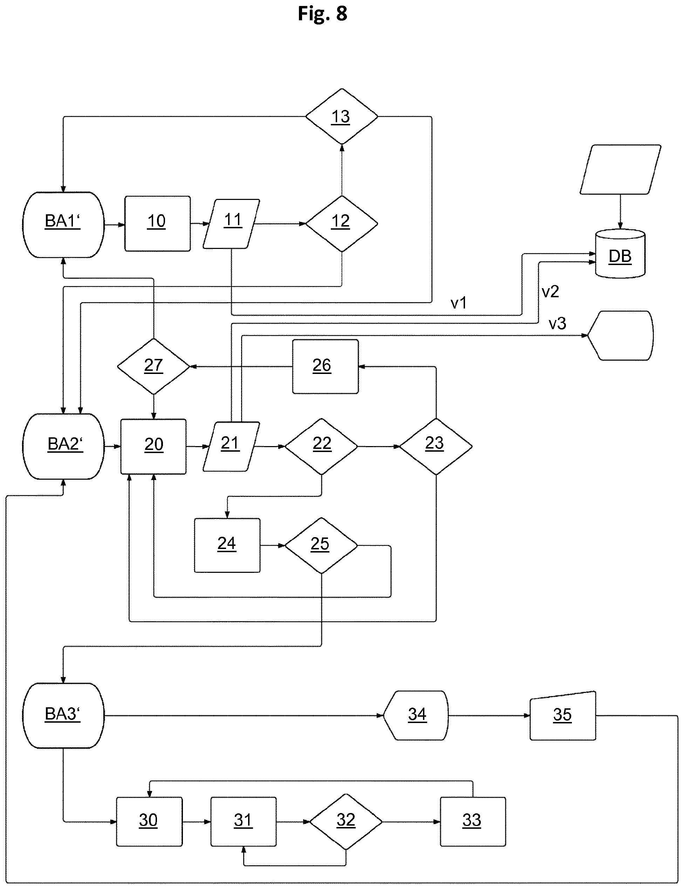

Figur 8 zeigt schematisch ein vereinfachtes Flussdiagramm gemäß einer weiteren Ausführungsform des erfindungsgemäßen Betriebsverfahrens für die erfindungsgemäße Lastmesseinrichtung.

Block BA1' repräsentiert hierbei einen Startpunkt für die vorstehend bereits unter Bezugnahme auf Figur 7 beschriebene erste Betriebsart BA1, Block BA2' repräsentiert hierbei einen Startpunkt für die zweite Betriebsart BA2, und Block BA3' repräsentiert hierbei einen Startpunkt für die dritte Betriebsart BA3.

Bei einer Ausführungsform startet der Ablauf in Block BA1'. Dies kann beispielsweise durch eine Aktivierung (Einschalten der Lastmesseinrichtung bzw. Verbinden der Steuereinheit 140 mit der elektrischen Energieversorgungseinrichtung 160) bewerkstelligt werden. Aus Block BA1' wird zunächst in Block 10 verzweigt, der die Ermittlung der Verformungsmessgröße VMG bzw. der Zugkraft, die auf das Kraftübertragungselement 110 wirkt, mit der ersten Periodendauer von beispielsweise 10 Minuten zum Gegenstand hat. Die entsprechende Kraftmessung ist durch Block 11 symbolisiert. Sobald ein Messwert erhalten worden ist, wird in Block 12 geprüft, ob dieser einen ersten vorgebbaren Schwellwert übersteigt. Sofern der Messwert den ersten Schwellwert nicht übersteigt, wird zu Block 13 verzweigt, in dem geprüft wird, ob der aktuell erhaltene Messwert mit einem zuvor ermittelten und gegebenenfalls zwischen gespeicherten Messwert übereinstimmt (bzw. in einem vorgebbaren Toleranzbereich übereinstimmt, mithin eine Differenz aus dem aktuell erhaltenen Messwert und dem zuvor ermittelten Messwert einen Vergleichsschwellwert nicht überschreitet). Sofern der Vergleich aus Block 13 ergibt, dass der aktuell erhaltene Messwert zumindest im Wesentlichen mit dem zuvor ermittelten Messwert übereinstimmt (statischer Zustand), wird erneut zu Block BA1' verzweigt, die erste Betriebsart mithin beibehalten. Sofern der Vergleich aus Block 13 ergibt, dass der aktuell erhaltene Messwert von dem zuvor ermittelten Messwert abweicht, wird Block BA2' verzweigt, mithin aus der ersten Betriebsart zu der zweiten Betriebsart gewechselt, was im Wesentlichen dem Zustandsübergang Z1 gemäß Figur 7 entspricht. Sofern der Vergleich aus Block 12 bereits ergibt, dass der aktuell erhaltene Messwert den ersten vorgebbaren Schwellwert übersteigt, wird ebenfalls zu Block BA2' verzweigt. Mit anderen Worten sieht das Flussdiagramm gemäß Figur 8 einen Zustandswechsel von der ersten Betriebsart zu der zweiten Betriebsart in den beiden folgenden Fällen vor: 1. der aktuell erhaltene Messwert weicht von einem zuvor erhaltenen Messwert ab (dynamischer Zustand), ist jedoch kleiner als der vorgebbare erste Schwellwert, 2. der aktuelle Messwert überschreitet den ersten vorgebbaren Schwellwert.

Der Block DB aus Figur 8 repräsentiert eine zumindest zeitweise Speicherung, beispielsweise in Form einer Datenbank. Die Verbindung v1 gibt hierbei an, dass der in Block 11 erhaltene Messwert zumindest zeitweise gespeichert wird.

Aus Block BA2' wird zunächst in Block 20 verzweigt, der die Ermittlung der Verformungsmessgröße VMG bzw. der Zugkraft, die auf das Kraftübertragungselement 110 wirkt, mit der zweiten Periodendauer von beispielsweise einer Sekunde zum Gegenstand hat. Die entsprechende Kraftmessung ist durch Block 21 symbolisiert. Sobald ein Messwert erhalten worden ist, wird dieser gespeichert, vergleiche Verbindung v2, gegebenenfalls visuell signalisiert (mittels der optischen Signalisiereinrichtung 170, beispielsweise nach Art eines VU-Meters), vergleiche Verbindung v3, und in Block 22 wird geprüft, ob dieser Messwert einen zweiten vorgebbaren Schwellwert übersteigt, der bei bevorzugten Ausführungsformen identisch zu dem ersten vorgebbaren Schwellwert ist. Sofern der Messwert den zweiten Schwellwert übersteigt, wird zu Block 24 verzweigt, in dem eine Alarmwartezeit definiert wird, die beispielsweise einen Wert von 5 Minuten (300 Sekunden) aufweisen kann. Die Alarmwartezeit gibt bei einer bevorzugten Ausführungsform an, wie lange die Überschreitung des zweiten Schwellwerts toleriert wird, bevor in die dritte Betriebsart BA3' übergegangen wird. In Block 25 wird geprüft, ob die Alarmwartezeit verstrichen ist und dann gegebenenfalls in den Block BA3' übergegangen. Andernfalls wird von Block 25 zu Block 20 verzweigt.

Sofern die Prüfung in Block 22 ergeben hat, dass der Messwert den zweiten Schwellwert nicht übersteigt, wird zu Block 23 übergegangen, in dem geprüft wird, ob der aktuell mittels Block 21 erhaltene Messwert zumindest im Wesentlichen mit dem aus dem vorangehenden Messzyklus ermittelten Messwert übereinstimmt. Falls nicht, wird wiederum zu Block 20 verzweigt. Falls doch, wird zu Block 26 verzweigt, der eine Wartezeit für das Verbleiben in der zweiten Betriebsart definiert. In Block 27 wird überprüft, ob diese Wartezeit verstrichen ist. Falls ja, wird zu Block BA1' verzweigt, falls nein, wird erneut zu Block 20 verzweigt.

Bei einer bevorzugten Ausführungsform wird die Alarmbetriebsart nicht verlassen, bis sie manuell deaktiviert wird. Beispielsweise wird aus Block BA3' zunächst in Block 30 verzweigt, der ein Sendezeitintervall von vorliegend beispielsweise 30 Minuten definiert. Das Sendezeitintervall gibt diejenige Zeitdauer an, für die die zweite Schnittstelle 130b (Fig. 1), die beispielsweise ein WLAN-Modul enthält, aktiviert werden soll. Sodann erfolgt in Block 31 die Aktivierung der zweiten Schnittstelle 130b bzw. des WLAN-Moduls. Bevorzugt parallel zu dem Verzweigen in Block 30 wird ein optisches Warnsignal ausgelöst, vergleiche Block 34. Das optische Warnsignal kann beispielsweise durch eine periodische Ansteuerung wenigstens einer roten Leuchtdiode der optischen Signalisiereinrichtung 170 (Fig. 1) erzeugt werden. Aus Block 31 wird zu Block 32 übergegangen, in dem überprüft wird, ob die WLAN-Verbindung mit der zweiten externen Einheit 300 bereits aufgebaut worden ist. Falls nein, wird wieder zu Block 31 gewechselt. Falls doch, wird Block 33 verzweigt, in dem ein oder mehrere Informationen an die externe Einheit 300 übertragen werden. Bei diesen Informationen kann es sich insbesondere um einen aktuellen Messwert handeln, also einen Wert der Verformungsmessgröße VMG, und/oder um andere Daten, z.B.: eine aus der Verformungsmessgröße VMG abgeleitete Kraft, eine aktuelle Betriebsart, Daten des Einsatzortes bzw. Zielsystems (Standort, Datum, Uhrzeit, Informationen zu einem Betreiber des Zielsystems ("Messe"), Hallennummer, Standnummer), einen Ladezustand bzw. Betriebszustand der Energieversorgungseinrichtung 160, usw. Aus Block 33 wird schließlich zu Block 30 verzweigt.

Das Übertragen in Block 33 kann bei weiteren Ausführungsformen beispielsweise auch umfassen: Übertragen von Daten an einen FTP ("file transfer protocol")-Server, Senden einer Email, Übertragen von Daten gemäß weiteren Netzwerkprotokollen, welche über die WLAN-Verbindung DV2 nutzbar sind.

Bei einer bevorzugten Ausführungsform ist ein Verlassen der dritten Betriebsart dann, und vorzugsweise nur dann, möglich, wenn die Lastmesseinrichtung ein entsprechendes Kommando, insbesondere einen Rücksetzbefehl, z.B. von dem Mobilgerät 200 (Fig. 1) empfängt. Dies ist in dem Flussdiagramm gemäß Figur 8 durch den Block 35 symbolisiert und kann beispielsweise dadurch erfolgen, dass eine Bedienperson mit einem Mobilgerät 200 den Einbauort der betreffenden Lastmesseinrichtung aufsucht, eine RFID-Datenverbindung DV1 (Fig. 1) mit dieser über die erste Schnittstelle 130a herstellt, und das Kommando zum Beenden der Alarmbetriebsart BA3 sendet. Alternativ oder ergänzend kann vorgesehen sein, dass ein Taster (vgl. Bezugszeichen 172 aus Figur 5A) oder ein vergleichbares Eingabeelement, welches an der Lastmesseinrichtung, insbesondere im Bereich eines Gehäuses, vorgesehen ist, durch eine Bedienperson betätigt werden muss, um die Alarmbetriebsart BA3 zu verlassen, wodurch zu Block BA2' aus Figur 8 verzweigt wird.

Bei manchen Ausführungsformen kann vorgesehen sein, dass die Steuereinheit 140 der Lastmesseinrichtung zur Ausführung wenigstens mancher, vorzugsweise aller, der in Figur 8 abgebildeten Schritte entweder in der abgebildeten Weise oder zumindest in ähnlicher Weise ausgebildet ist.

Nachfolgend sind einige Beispiele für mögliche Betriebsszenarien gemäß bevorzugter Ausführungsformen angegeben, die auf dem Flussdiagramm der Figur 8 beruhen.

Beispiel SBM1: Es wird davon ausgegangen, dass sich die Lastmesseinrichtung in der ersten Betriebsart, also der Bereitschaftsbetriebsart, befindet, vergleiche Block BA1'. Die in Block 11 gemäß Figur 8 ermittelte bzw. aus der aktuell in Block 11 gemessenen Verformungsmessgröße VMG abgeleitete Kraft ist statisch, und der erste vorgebbare Schwellwert ("Kraftobergrenze") wird nicht überschritten. Beispielsweise ist die Kraftobergrenze zu bzw. entsprechend 110 kg konfiguriert worden, die aktuell ermittelte "Kraft" (wird nachfolgend synonym zur "Masse" verwendet) beträgt 83 kg und entspricht der in dem vorangehenden Messzyklus (vor beispielsweise 10 Minuten, gemäß der ersten Periodendauer) ermittelten Kraft. In diesem Fall erfolgt alle 10 Minuten, also alle 600 Sekunden, entsprechend der ersten Periodendauer, eine erneute Messung bzw. Ermittlung der Kraft, vergleiche Block 11, und ein abermaliger Durchlauf durch die Blöcke 12, 13 zu Block BA1' sofern keine Änderung eintritt.

Beispiel SBM2: Es wird davon ausgegangen, dass sich die Lastmesseinrichtung wiederum in der ersten Betriebsart befindet, vergleiche Block BA1'. Die in Block 11 ermittelte Kraft ist im Gegensatz zu Beispiel SBM1 nicht statisch, und die Kraftobergrenze wird nicht überschritten. Beispielsweise beträgt die Kraftobergrenze nach wie vor 110 kg, die aktuell ermittelte Kraft beträgt 96 kg und weicht wesentlich von der in dem vorangehenden Messzyklus (vor beispielsweise 10 Minuten, gemäß der ersten Periodendauer) ermittelten Kraft, entsprechend 108 kg, ab. Daher erfolgt nach dem Durchlaufen der Blöcke 11, 12, 13 ein Übergang zu dem Block BA2'.

Beispiel SBM3: Es wird davon ausgegangen, dass sich die Lastmesseinrichtung wiederum in der ersten Betriebsart befindet, vergleiche Block BA1'. Die in Block 11 ermittelte Kraft ist statisch, aber die Kraftobergrenze wird überschritten. Beispielsweise beträgt die Kraftobergrenze 110 kg, und die aktuell ermittelte Kraft beträgt 112 kg. Daher erfolgt ein Übergang zu dem Block BA2'.

Beispiel LM1: Es wird davon ausgegangen, dass sich die Lastmesseinrichtung in der zweiten Betriebsart befindet, vergleiche Block BA2'. Die in Block 21 ermittelte Kraft ist statisch, und die Kraftobergrenze wird nicht überschritten. Beispielsweise beträgt die Kraftobergrenze 110 kg, die aktuell ermittelte Kraft 83 kg und weicht nicht von der in dem vorangehenden Messzyklus ermittelten Kraft ab. Es erfolgt somit jede Sekunde, entsprechend der zweiten Periodendauer, eine Messung, vgl. Block 21 sowie z.B. eine Ausgabe, vgl. Signal v3, bis die in Block 26 definierte Wartezeit abgelaufen ist. Sodann wird zu Block BA1' gewechselt.

Beispiel LM2: Es wird davon ausgegangen, dass sich die Lastmesseinrichtung in der zweiten Betriebsart befindet, vergleiche Block BA2'. Die in Block 21 ermittelte Kraft ist nicht statisch, und die Kraftobergrenze wird nicht überschritten. Beispielsweise beträgt die Kraftobergrenze 110 kg, die aktuell ermittelte Kraft 83 kg und weicht damit von der in dem vorangehenden Messzyklus ermittelten Kraft von 97 kg ab. Es erfolgt somit jede Sekunde, entsprechend der zweiten Periodendauer, eine Messung, vgl. Block 21 sowie z.B. eine Ausgabe, vgl. Signal v3, bis die aktuell gemessen Kraft (wieder) der zuvor ermittelten Kraft entspricht (Eintritt in den stationären Zustand). Sodann wird nach Ablauf der in Block 26 definierten Wartezeit zu Block BA1' gewechselt.

Beispiel LM3: Es wird davon ausgegangen, dass sich die Lastmesseinrichtung in der zweiten Betriebsart befindet, vergleiche Block BA2'. Die in Block 21 ermittelte Kraft ist statisch, und die Kraftobergrenze wird überschritten. Beispielsweise beträgt die Kraftobergrenze 110 kg, die aktuell ermittelte Kraft 130 kg und weicht nicht von der in dem vorangehenden Messzyklus ermittelten Kraft ab. Es erfolgt somit jede Sekunde, entsprechend der zweiten Periodendauer, eine Messung, vgl. Block 21 sowie z.B. eine Ausgabe, vgl. Signal v3, bis die in Block 24 definierte Alarmwartezeit von beispielsweise 300 Sekunden abgelaufen ist. Sodann wird zu Block BA3' gewechselt.

Beispiel LM4: Es wird davon ausgegangen, dass sich die Lastmesseinrichtung in der zweiten Betriebsart befindet, vergleiche Block BA2'. Die in Block 21 ermittelte Kraft ist nicht statisch, und die Kraftobergrenze wird überschritten. Beispielsweise beträgt die Kraftobergrenze 110 kg, die aktuell ermittelte Kraft 130 kg und weicht von der in dem vorangehenden Messzyklus ermittelten Kraft von 97 kg ab. Es erfolgt somit jede Sekunde, entsprechend der zweiten Periodendauer, eine Messung, vgl. Block 21 sowie z.B. eine Ausgabe, vgl. Signal v3, bis die in Block 24 definierte Alarmwartezeit von beispielsweise 300 Sekunden abgelaufen ist. Sodann wird zu Block BA3' gewechselt.

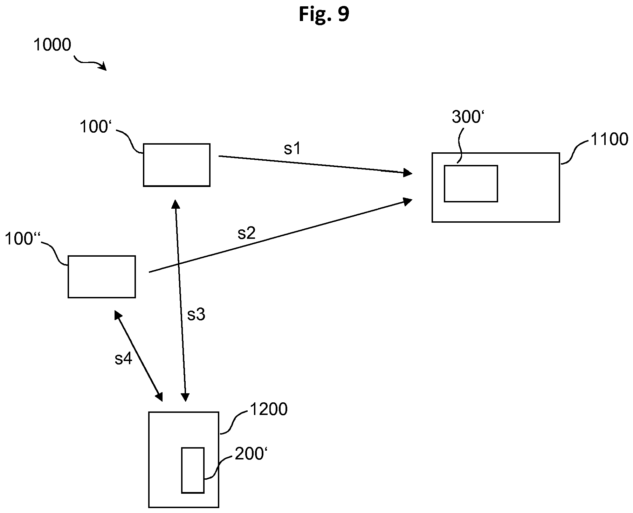

Figur 9 zeigt schematisch ein Blockdiagramm eines Lastmesssystems 1000 gemäß einer Ausführungsform. Das Lastmesssystem weist vorliegend zwei Lastmesseinrichtungen 100', 100" auf, die die vorstehend beschriebene Funktionalität aufweisen, insoweit beispielsweise den Ausführungsformen 100, 100a, 100b, 100c oder Abwandlungen hiervon entsprechen können. Das Lastmesssystem 1000 weist ferner eine Zentrale 1100 auf, die einer bevorzugten Ausführungsform zufolge zur Verwaltung der Lastmesseinrichtungen 100', 100" vorgesehen ist. Hierbei kann die Zentrale 1100 über eine Kommunikationsschnittstelle 300' verfügen, die beispielsweise vergleichbar zu der externen Einheit 300 ausgebildet ist, beispielsweise ein WLAN-Modul aufweist, damit die Herstellung einer zweiten Datenverbindung DV2 zu einer betreffenden Lastmesseinrichtung wie bereits vorstehend mehrfach beschrieben ermöglicht. Über diese Datenverbindung DV2 können die einzelnen Lastmesseinrichtungen der Zentrale 1100 beispielsweise ihren Betriebszustand bzw. ihre aktuelle Betriebsart übermitteln, vergleiche die Pfeile s1, s2, insbesondere auch das Einnehmen einer Alarmbetriebsart. Obwohl die Pfeile s1, s2 in Figur 9 nicht als Doppelpfeile ausgebildet sind, können die entsprechenden Datenverbindungen auch einen bidirektionalen Datenaustausch umfassen.

Ferner kann bei dem System 1000 wenigstens ein Mobilgerät 1200, beispielsweise nach Art eines Smartphones oder Tablets, vorgesehen sein, das über eine Kommunikationsschnittstelle 200' verfügt, die beispielsweise vergleichbar zu der externen Einheit 200 ausgebildet ist somit beispielsweise die Herstellung einer RFID-basierten ersten Datenverbindung DV1 ermöglicht. Das Mobilgerät 1200 kann beispielsweise vorteilhaft für eine Konfiguration der Lastmesseinrichtungen 100', 100" vor Ort, d.h. in unmittelbarer räumlicher Nähe zu den Lastmesseinrichtungen, genutzt werden, vergleiche die Doppelpfeile s3, s4, die einen entsprechenden Datenaustausch über die RFID-Schnittstellen der beteiligten Komponenten ermöglichen.

Bei einer bevorzugten Ausführungsform ist vorgesehen, dass das Lastmesssystem 1000 Informationen über eine Statik bzw. die mechanische Stabilität von zur Aufhängung von Lasten unter Verwendung der erfindungsgemäßen Lastmesseinrichtungen vorgesehenen Aufhängepunkten bzw. Tragelementen aufweist, wodurch das Lastmesssystem 1000 in Abhängigkeit der von den Lastmesseinrichtungen 100', 100" erhaltenen Informationen vorteilhaft den tatsächlichen Belastungszustand der beanspruchten Struktur (Gebäudedecke, Wände, Aufhängepunkte, Tragelemente) ermitteln und gegebenenfalls einen kritischen Belastungszustand signalisieren kann.

Beispielsweise kann bei einem Zielsystem, welches eine Gebäudedecke mit einer ersten Anzahl von Aufhängepunkten AP (Fig. 1) aufweist, vorgesehen sein, dass das erfindungsgemäße Lastmesssystem 1000 (Fig. 9) periodisch die aggregierte Belastung der Gebäudedecke ermittelt und mit vorgebbaren Maximalwerten vergleicht. Dadurch ist vorteilhaft sichergestellt, dass auch bei großen Zielsystemen mit komplexen Aufbauten (beispielsweise große Zahl von Aufhängepunkten bzw. Lasten) stets die für einen sicheren Betrieb erforderlichen Grenzwerte eingehalten werden.

Des Weiteren kann das Lastmesssystem 1000 vorteilhaft dazu ausgebildet sein, weitere Betriebsparameter der Lastmesseinrichtungen 100', 100" zu überwachen, beispielsweise einen Zustand ihrer elektrischen Energiespeichereinrichtung, und dergleichen.

Die erfindungsgemäße Lastmesseinrichtung repräsentiert vorteilhaft eine autarke Lastmesszelle, die bei manchen Ausführungsformen beispielsweise eine dynamische Kraftanzeige mittels ein oder mehrerer Leuchtdioden, beispielsweise nach Art eines VU-Meters, ermöglicht.

Durch die bei manchen Ausführungsformen vorgeschlagenen verschiedenen Betriebsarten, insbesondere die erste auch als Bereitschaftsbetriebsart bezeichnete Betriebsart BA1 (Fig. 7) ist vorteilhaft sichergestellt, dass - trotz eines Messbetriebs (beispielsweise mit der ersten Periodendauer von etwa 10 Minuten) - eine vergleichsweise geringe elektrische Leistungsaufnahme gegeben ist, sodass die Lastmesseinrichtung für lange Zeit in dem Zielsystem verbleiben kann, ohne ein erneutes Aufladen erfordern. Bei manchen Ausführungsformen können dem erfindungsgemäßen Prinzip folgend Laufzeiten von 40 Tagen und mehr erreicht werden, ohne dass die Lastmesseinrichtung bzw. ihre elektrischen Energiespeicher aufgeladen werden müssen.

Bei einer bevorzugten Ausführungsform kann auch vorgesehen sein, dass mittels Konfiguration ein Startdatum und/oder eine Startuhrzeit vorgegeben wird, und dass sich die Lastmesseinrichtung erst bei Erreichen des Startdatums und/oder der Startuhrzeit bezüglich der Lastmessung aktiviert, z.B. die erste oder zweit Betriebsart BA1, BA2 annimmt. Davor kann eine vierte Betriebsart, Wartebetriebsart, eingenommen werden, in der keine Lastmessung erfolgt, was die Einsatzdauer der Lastmesseinrichtung weiter steigert, z.B. auf bis über 40 Tage (im Messbetrieb, also mindestens der ersten Betriebsart BA1).

Bei einer weiteren bevorzugten Ausführungsform kann ein Aufbewahrungsbehältnis ("Case") bzw. Transportbehältnis, das die Lastmesseinrichtung bei Nichtgebrauch vor äußeren Einflüssen schützt, vorteilhaft gleichzeitig mit einer Ladefunktion zum beispielsweise induktiven Aufladen vorgesehen sein.

Die erfindungsgemäße Lastmesseinrichtung ermöglicht vorteilhaft eine zuverlässige Lastmessung, insbesondere im Bereich der Veranstaltungstechnik, und eine Darstellung der gemessenen Last. Die erfindungsgemäße Lastmesseinrichtung ist insbesondere auch für eine systematische und flächendeckende Überwachung von Hängepunktbelastungen geeignet, weil die ermittelten Messwerte effizient einer Zentrale zur gemeinsamen Auswertung zugeführt werden können.

Besonders vorteilhaft können durch die Möglichkeit zur Speicherung von Konfigurationsdaten in der Lastmesseinrichtung beispielsweise Informationen betreffend den Bestimmungsort und/oder den (geplanten) Nutzungszeitraum (Start/Ende) hinterlegt werden, die gegebenenfalls auch für einen laufenden Betrieb der Lastmesseinrichtung nutzbar sind (z.B. Aktivierung von eine Messung ermöglichenden Betriebsarten BA1, BA2 nur während des geplanten Nutzungszeitraums). Beispielsweise kann in Abhängigkeit von einem geplanten hinterlegten Nutzungszeitraum eine Parametrierung der Lastmesseinrichtung, insbesondere hinsichtlich von Wartezeiten bzw. Zustandsübergängen zwischen unterschiedlichen Betriebsarten, modifiziert werden. Besonders vorteilhaft kann die erfindungsgemäße Lastmesseinrichtung eine vorhandene Belastung bzw. Last in einstellbaren Intervallen messen. Über die erste Schnittstelle, bevorzugt vom RFID-Typ, können vorteilhaft alle Parameter für den Betrieb der Lastmesseinrichtung gesetzt und/oder ausgelesen werden. Über die zweite Schnittstelle, bevorzugt vom WLAN-Typ, kann darüber hinaus vorteilhaft beispielsweise eine Überlast gemeldet werden. Optional kann eine Überlast auch ergänzend oder alternativ visuell signalisiert werden.

## Patentansprüche

1. Lastmesseinrichtung (100; 100a; 100b; 100c; 100'; 100") zur Aufhängung einer Last mit einem Kraftübertragungselement (110), wenigstens einer Messeinheit (120) zur Ermittlung wenigstens einer eine Verformung wenigstens eines Bereichs des Kraftübertragungselements (110) charakterisierenden Verformungsmessgröße (VMG), einer ersten Schnittstelle (130a) zur drahtlosen Datenübertragung mit wenigstens einer ersten externen Einheit (200), einer zweiten Schnittstelle (130b) zur drahtlosen Datenübertragung mit wenigstens einer zweiten externen Einheit (300), und mit einer Steuereinheit (140) zur Steuerung eines Betriebs der Lastmesseinrichtung (100; 100a; 100b; 100c; 100'; 100"), wobei die Lastmesseinrichtung (100; 100a; 100b; 100c; 100'; 100") dazu ausgebildet ist, mittels der ersten Schnittstelle (130a) Daten mit der wenigstens einen ersten externen Einheit (200) auszutauschen und mittels der zweiten Schnittstelle (130b) Daten mit der wenigstens einen zweiten externen Einheit (300) auszutauschen, wobei die Lastmesseinrichtung (100; 100a; 100b; 100c; 100'; 100") einen lokalen Konfigurationsspeicher (150a) zur zumindest zeitweisen Speicherung von Konfigurationsdaten (CFG) aufweist, wobei die Lastmesseinrichtung (100; 100a; 100b; 100c; 100'; 100") dazu ausgebildet ist, mittels der ersten Schnittstelle (130a) erste Konfigurationsdaten (cfg1) von der ersten externen Einheit (200) zu empfangen.

2. Lastmesseinrichtung (100; 100a; 100b; 100c; 100'; 100") nach Anspruch 1, wobei die erste Schnittstelle (130a) einen ersten Schnittstellentyp aufweist, und wobei die zweite Schnittstelle (130b) einen zweiten Schnittstellentyp aufweist, der von dem ersten Schnittstellentyp verschieden ist, wobei insbesondere der erste Schnittstellentyp eine RFID-Schnittstelle oder eine NFC-Schnittstelle ist.

3. Lastmesseinrichtung (100; 100a; 100b; 100c; 100'; 100") nach wenigstens einem der vorstehenden Ansprüche, wobei die Lastmesseinrichtung (100; 100a; 100b; 100c; 100'; 100") dazu ausgebildet ist, zumindest zeitweise über die zweite Schnittstelle (130b) eine Datenverbindung zu der zweiten externen Einheit (300) aufzubauen, und wenigstens eine erste einen Betriebszustand der Lastmesseinrichtung (100; 100a; 100b; 100c; 100'; 100") charakterisierende Betriebsinformation über die zweite Schnittstelle (130b) an die zweite externe Einheit (300) zu senden.

4. Lastmesseinrichtung (100; 100a; 100b; 100c; 100'; 100") nach wenigstens einem der vorstehenden Ansprüche, wobei die Lastmesseinrichtung (100; 100a; 100b; 100c; 100'; 100") eine aufladbare elektrische Energieversorgungseinrichtung (160) aufweist, und wobei die Lastmesseinrichtung (100; 100a; 100b; 100c; 100'; 100") insbesondere eine Ladeeinrichtung (162) zum induktiven Aufladen der Energieversorgungseinrichtung (160) aufweist, wobei insbesondere die Lastmesseinrichtung (100; 100a; 100b; 100c; 100'; 100") wenigstens eine optische Signalisiereinrichtung (170) aufweist, die insbesondere zur Ausgabe wenigstens eines einen Betriebszustand wenigstens einer Komponente der Lastmesseinrichtung (100; 100a; 100b; 100c; 100'; 100") charakterisierenden optischen Signals (OS1) ausgebildet ist.

5. Lastmesseinrichtung (100; 100a; 100b; 100c; 100'; 100") nach wenigstens einem der vorstehenden Ansprüche, wobei die Steuereinheit (140) dazu ausgebildet ist, zumindest zeitweise wenigstens eine der folgenden Betriebsarten einzunehmen: a) eine erste Betriebsart (BA1), insbesondere Bereitschaftsbetriebsart, wobei insbesondere die Steuereinheit (140) dazu ausgebildet ist, in der ersten Betriebsart die Verformungsmessgröße (VMG), vorzugsweise periodisch, auszuwerten, insbesondere mit einem ersten Schwellwert zu vergleichen, b) eine zweite Betriebsart (BA2), insbesondere Live-Betriebsart, wobei insbesondere die Steuereinheit (140) dazu ausgebildet ist, in der zweiten Betriebsart die Verformungsmessgröße (VMG), vorzugsweise periodisch, auszuwerten, insbesondere mit einem zweiten Schwellwert zu vergleichen, c) eine dritte Betriebsart (BA3), insbesondere Alarmbetriebsart, wobei insbesondere die Steuereinheit (140) dazu ausgebildet ist, in der dritten Betriebsart wenigstens eine zweite einen Betriebszustand der Lastmesseinrichtung (100; 100a; 100b; 100c; 100'; 100") charakterisierende Betriebsinformation an die zweite externe Einheit (300) zu senden und/oder ein optisches Signal (OS1) auszugeben.

6. Lastmesseinrichtung (100; 100a; 100b; 100c; 100'; 100") nach wenigstens einem der vorstehenden Ansprüche, wobei das Kraftübertragungselement (110) eine Grundform mit einem ersten axialen Endbereich (112a) und einem zweiten axialen Endbereich (112b) aufweist, wobei in dem ersten axialen Endbereich (112a) erste Befestigungsmittel (114a) zum Herstellen einer Verbindung mit einer ersten externen Komponente (AP; 410) vorgesehen sind, wobei in dem zweiten axialen Endbereich (112b) zweite Befestigungsmittel (114b) zum Herstellen einer Verbindung mit einer zweiten externen Komponente (SW; 420) vorgesehen sind, wobei insbesondere das Kraftübertragungselement (110) im Wesentlichen plattenförmig ausgebildet ist, wobei wenigstens eine erste Schaltungsträgerplatte (180) auf einer ersten Oberfläche (110a) des Kraftübertragungselements (110) angeordnet ist, wobei insbesondere wenigstens eine weitere Schaltungsträgerplatte (182) auf einer zweiten Oberfläche (110b) des Kraftübertragungselements (110) angeordnet ist, die der ersten Oberfläche (110a) gegenüberliegt.

7. Lastmesseinrichtung (100; 100a; 100b; 100c; 100'; 100") nach Anspruch 6, wobei wenigstens eine Komponente der Steuereinheit (140) auf der wenigstens einen ersten Schaltungsträgerplatte (180) angeordnet ist, und wobei wenigstens eine Komponente der ersten und/oder zweiten Schnittstelle (130a, 130b) auf der wenigstens einen weiteren Schaltungsträgerplatte (182) angeordnet ist.

8. Lastmesseinrichtung (100; 100a; 100b; 100c; 100'; 100") nach wenigstens einem der vorstehenden Ansprüche, wobei die Lastmesseinrichtung (100; 100a; 100b; 100c; 100'; 100") ein Gehäuse (190) aufweist, das wenigstens einen axial mittleren Bereich (112c) des Kraftübertragungselements (110) umgibt, wobei insbesondere das Gehäuse (190) wenigstens bereichsweise ein transluzentes oder transparentes Material aufweist, wobei insbesondere das Gehäuse (190) wenigstens zwei Halbschalen (192, 194) aufweist, wobei eine erste Halbschale (192) einer ersten Oberfläche (110a) des Kraftübertragungselements (110) zugeordnet ist, und wobei eine zweite Halbschale (194) einer zweiten Oberfläche (110b) des Kraftübertragungselements (110) zugeordnet ist.

9. Lastmesssystem (1000) aufweisend wenigstens eine Lastmesseinrichtung (100; 100a; 100b; 100c; 100'; 100") nach einem der vorstehenden Ansprüche und eine Zentrale (1100).

10. Verfahren zum Betreiben einer Lastmesseinrichtung (100; 100a; 100b; 100c; 100'; 100") zur Aufhängung einer Last mit einem Kraftübertragungselement (110), wenigstens einer Messeinheit (120) zur Ermittlung wenigstens einer eine Verformung wenigstens eines Bereichs des Kraftübertragungselements (110) charakterisierenden Verformungsmessgröße (VMG), einer ersten Schnittstelle (130a) zur drahtlosen Datenübertragung mit wenigstens einer ersten externen Einheit (200), einer zweiten Schnittstelle (130b) zur drahtlosen Datenübertragung mit wenigstens einer zweiten externen Einheit (300), und mit einer Steuereinheit (140) zur Steuerung eines Betriebs der Lastmesseinrichtung (100; 100a; 100b; 100c; 100'; 100"), wobei die Lastmesseinrichtung (100; 100a; 100b; 100c; 100'; 100") mittels der ersten Schnittstelle (130a) Daten mit der wenigstens einen ersten externen Einheit (200) austauscht, und wobei die Lastmesseinrichtung (100; 100a; 100b; 100c; 100'; 100") mittels der zweiten Schnittstelle (130b) Daten mit der wenigstens einen zweiten externen Einheit (300) austauscht, wobei die Lastmesseinrichtung (100; 100a; 100b; 100c; 100'; 100") einen lokalen Konfigurationsspeicher (150a) zur zumindest zeitweisen Speicherung von Konfigurationsdaten (CFG) aufweist, wobei die Lastmesseinrichtung (100; 100a; 100b; 100c; 100'; 100") mittels der ersten Schnittstelle (130a) erste Konfigurationsdaten (cfg1) von der ersten externen Einheit (200) empfängt.

11. Verfahren nach Anspruch 10, wobei die erste Schnittstelle (130a) einen ersten Schnittstellentyp aufweist, und wobei die zweite Schnittstelle (130b) einen zweiten Schnittstellentyp aufweist, der von dem ersten Schnittstellentyp verschieden ist, wobei insbesondere der erste Schnittstellentyp eine RFID-Schnittstelle oder eine NFC-Schnittstelle ist.

12. Verfahren nach wenigstens einem der Ansprüche 10 bis 11, wobei die Lastmesseinrichtung (100; 100a; 100b; 100c; 100'; 100") über die erste Schnittstelle (130a) Konfigurationsdaten (CFG) an die wenigstens eine erste externe Einheit (200) sendet.

13. Verfahren nach wenigstens einem der Ansprüche 10 bis 12, wobei die Lastmesseinrichtung (100; 100a; 100b; 100c; 100'; 100") über die zweite Schnittstelle (130b) wenigstens eine erste einen Betriebszustand der Lastmesseinrichtung (100; 100a; 100b; 100c; 100'; 100") charakterisierende Betriebsinformation an die zweite externe Einheit (300) sendet.

14. Verfahren nach wenigstens einem der Ansprüche 10 bis 13, wobei die Lastmesseinrichtung (100; 100a; 100b; 100c; 100'; 100"), insbesondere die Steuereinheit (140) der Lastmesseinrichtung (100; 100a; 100b; 100c; 100'; 100"), zumindest zeitweise wenigstens eine der folgenden Betriebsarten einnimmt: a) eine erste Betriebsart (BA1), insbesondere Bereitschaftsbetriebsart, wobei insbesondere die Steuereinheit (140) dazu ausgebildet ist, in der ersten Betriebsart die Verformungsmessgröße (VMG), vorzugsweise periodisch, auszuwerten, insbesondere mit einem ersten Schwellwert zu vergleichen, b) eine zweite Betriebsart (BA2), insbesondere Live-Betriebsart, wobei insbesondere die Steuereinheit (140) dazu ausgebildet ist, in der zweiten Betriebsart die Verformungsmessgröße (VMG), vorzugsweise periodisch, auszuwerten, insbesondere mit einem zweiten Schwellwert zu vergleichen, c) eine dritte Betriebsart (BA3), insbesondere Alarmbetriebsart, wobei insbesondere die Steuereinheit (140) dazu ausgebildet ist, in der dritten Betriebsart wenigstens eine zweite einen Betriebszustand der Lastmesseinrichtung (100; 100a; 100b; 100c; 100'; 100") charakterisierende Betriebsinformation an die zweite externe Einheit (300) zu senden und/oder ein optisches Signal (OS1) auszugeben.

15. Verfahren nach Anspruch 14, wobei die Lastmesseinrichtung (100; 100a; 100b; 100c; 100'; 100") von der ersten Betriebsart (BA1) in die zweite Betriebsart (BA2) wechselt, wenn a) die Verformungsmessgröße (VMG) einen ersten Schwellwert überschreitet, b) und/oder wenn die Verformungsmessgröße (VMG) den ersten Schwellwert nicht überschreitet, aber von einem in einem vorangehenden Messzyklus ermittelten Wert für die Verformungsmessgröße abweicht, wobei insbesondere die Lastmesseinrichtung (100; 100a; 100b; 100c; 100'; 100") von der zweiten Betriebsart (BA2) in die dritte Betriebsart (BA3) wechselt, wenn die Verformungsmessgröße (VMG) einen vorgebbaren zweiten Schwellwert überschreitet, insbesondere, wenn die Verformungsmessgröße (VMG) über einen vorgebbaren Überwachungszeitraum den vorgebbaren zweiten Schwellwert überschreitet, wobei insbesondere die Lastmesseinrichtung (100; 100a; 100b; 100c; 100'; 100") von der dritten Betriebsart (BA3) in die zweite Betriebsart wechselt, wenn von einer externen Einheit (200, 300) und/oder einer Bedienperson ein Rücksetzbefehl erhalten wird.

## Claims

1. Load measuring device (100; 100a; 100b; 100c; 100'; 100") for suspending a load, with a force transmission element (110), at least one measuring unit (120) for determining at least one deformation parameter (VMG) characterising a deformation of at least one region of the force transmission element (110), a first interface (130a) for wireless data transmission with at least one first external unit (200), a second interface (130b) for wireless data transmission with at least one second external unit (300), and with a control unit (140) for controlling an operation of the load measuring device (100; 100a; 100b; 100c; 100'; 100"), wherein the load measuring device (100; 100a; 100b; 100c; 100'; 100") is configured to exchange data with the at least one first external unit (200) by means of the first interface (130a) and to exchange data with the at least one second external unit (300) by means of the second interface (130b), wherein the load measuring device (100; 100a; 100b; 100c; 100'; 100") has a local configuration memory (150a) for at least temporary storage of configuration data (CFG), wherein the load measuring device (100; 100a; 100b; 100c; 100'; 100") is configured to receive first configuration data (cfg1) from the first external unit (200) by means of the first interface (130a).

2. Load measuring device (100; 100a; 100b; 100c; 100'; 100") according to claim 1, wherein the first interface (130a) has a first interface type, and wherein the second interface (130b) has a second interface type which is different from the first interface type, wherein in particular the first interface type is an RFID interface or an NFC interface.

3. Load measuring device (100; 100a; 100b; 100c; 100'; 100") according to at least one of the preceding claims, wherein the load measuring device (100; 100a; 100b; 100c; 100'; 100") is configured for at least part of the time to establish a data connection to the second external unit (300) via the second interface (130b) and to send at least one first operating information characteristic of an operating state of the load measuring device (100; 100a; 100b; 100c; 100'; 100") to the second external unit (300) via the second interface (130b).

4. Load measuring device (100; 100a; 100b; 100c; 100'; 100") according to at least one of the preceding claims, wherein the load measuring device (100; 100a; 100b; 100c; 100'; 100") has a rechargeable electrical energy supply device (160), and wherein the load measuring device (100; 100a; 100b; 100c; 100'; 100") in particular has a charging device (162) for inductive charging of the energy supply device (160), wherein in particular the load measuring device (100; 100a; 100b; 100c; 100'; 100") has at least one optical signalling device (170) which is configured in particular to output at least one optical signal (OS1) characteristic of an operating state of at least one component of the load measuring device (100; 100a; 100b; 100c; 100'; 100").

5. Load measuring device (100; 100a; 100b; 100c; 100'; 100") according to at least one of the preceding claims, wherein the control unit (140) is configured to assume at least one of the following operating modes for at least part of the time: a) a first operating mode (BA1), in particular a standby operating mode, wherein in particular the control unit (140) is configured in the first operating mode to evaluate the deformation parameter (VMG), preferably periodically, in particular to compare it with a first threshold value; b) a second operating mode (BA2), in particular a live operating mode, wherein in particular the control unit (140) is configured in the second operating mode to evaluate the deformation parameter (VMG), preferably periodically, in particular to compare it with a second threshold value; c) a third operating mode (BA3), in particular an alarm operating mode, wherein in particular the control unit (140) is configured in the third operating mode to send at least one second operating information characteristic of an operating state of the load measuring device (100; 100a; 100b; 100c; 100'; 100") to the second external unit (300) and/or to output an optical signal (OS1).

6. Load measuring device (100; 100a; 100b; 100c; 100'; 100") according to at least one of the preceding claims, wherein the force transmission element (110) has a base form with a first axial end region (112a) and a second axial end region (112b), wherein first fixing means (114a) are provided in the first axial end region (112a) for creating a connection to a first external component (AP; 410), wherein second fixing means (114b) are provided in the second axial end region (112b) for creating a connection to a second external component (SW; 420), wherein in particular the force transmission element (110) is substantially plate-like, wherein at least a first circuit carrier board (180') is arranged on a first surface (110a) of the force transmission element (110), wherein in particular at least one further circuit carrier board (182) is arranged on a second surface (110b) of the force transmission element (110) which lies opposite the first surface (110a).

7. Load measuring device (100; 100a; 100b; 100c; 100'; 100") according to claim 6, wherein at least one component of the control unit (140) is arranged on the at least one first circuit carrier board (180), and wherein at least one component of the first and/or second interface (130a, 130b) is arranged on the at least one further circuit carrier board (182).

8. Load measuring device (100; 100a; 100b; 100c; 100'; 100") according to at least one of the preceding claims, wherein the load measuring device (100; 100a; 100b; 100c; 100'; 100") has a housing (190) which surrounds at least one axially middle region (112c) of the force transmission element (110), wherein in particular the housing (190) comprises a translucent or transparent material at least in regions, wherein in particular the housing (190) has at least two half shells (192, 194), wherein a first half shell (192) is assigned to a first surface (110a) of the force transmission element (110), and wherein a second half shell (194) is assigned to a second surface (110b) of the force transmission element (110).

9. Load measuring system (1000) having at least one load measuring device (100; 100a; 100b; 100c; 100'; 100") according to any of the preceding claims, and a control centre (1100).

10. Method for operating a load measuring device (100; 100a; 100b; 100c; 100'; 100") for suspending a load, with a force transmission element (110), at least one measuring unit (120) for determining at least one deformation parameter (VMG) characterising a deformation of at least one region of the force transmission element (110), a first interface (130a) for wireless data transmission with at least one first external unit (200), a second interface (130b) for wireless data transmission with at least one second external unit (300), and with a control unit (140) for controlling an operation of the load measuring device (100; 100a; 100b; 100c; 100'; 100"), wherein the load measuring device (100; 100a; 100b; 100c; 100'; 100") exchanges data with the at least one first external unit (200) by means of the first interface (130a), and wherein the load measuring device (100; 100a; 100b; 100c; 100'; 100") exchanges data with the at least one second external unit (300) by means of the second interface (130b), wherein the load measuring device (100; 100a; 100b; 100c; 100'; 100") has a local configuration memory (150a) for at least temporary storage of configuration data (CFG), wherein the load measuring device (100; 100a; 100b; 100c; 100'; 100") is configured to receive first configuration data (cfg1) from the first external unit (200) by means of the first interface (130a).

11. Method according to claim 10, wherein the first interface (130a) has a first interface type, and wherein the second interface (130b) has a second interface type which is different from the first interface type, wherein in particular the first interface type is an RFID interface or an NFC interface.

12. Method according to at least one of claims 10 to 11, wherein the load measuring device (100; 100a; 100b; 100c; 100'; 100") sends configuration data (CFG) to the at least one first external unit (200) via the first interface (130a).

13. Method according to at least one of claims 10 to 12, wherein the load measuring device (100; 100a; 100b; 100c; 100'; 100") sends at least one first operating information characteristic of an operating state of the load measuring device (100; 100a; 100b; 100c; 100'; 100") to the second external unit (300) via the second interface (130b).

14. Method according to at least one of claims 10 to 13, wherein the load measuring device (100; 100a; 100b; 100c; 100'; 100"), in particular the control unit (140) of the load measuring device (100; 100a; 100b; 100c; 100'; 100"), assumes at least one of the following operating modes for at least part of the time: a) a first operating mode (BA1), in particular a standby operating mode, wherein in particular the control unit (140) is configured in the first operating mode to evaluate the deformation parameter (VMG), preferably periodically, in particular to compare it with a first threshold value; b) a second operating mode (BA2), in particular a live operating mode, wherein in particular the control unit (140) is configured in the second operating mode to evaluate the deformation parameter (VMG), preferably periodically, in particular to compare it with a second threshold value; c) a third operating mode (BA3), in particular an alarm operating mode, wherein in particular the control unit (140) is configured in the third operating mode to send at least one second operating information characteristic of an operating state of the load measuring device (100; 100a; 100b; 100c; 100'; 100") to the second external unit (300) and/or to output an optical signal (OS1).

15. Method according to claim 14, wherein the load measuring device (100; 100a; 100b; 100c; 100'; 100") switches from the first operating mode (BA1) to the second operating mode (BA2) if a) the deformation parameter (VMG) exceeds a first threshold value, b) and/or if the deformation parameter (VMG) does not exceed the first threshold value but deviates from a value for the deformation parameter determined in the preceding measurement cycle, wherein in particular the load measuring device (100; 100a; 100b; 100c; 100'; 100") switches from the second operating mode (BA2) to the third operating mode (BA3) if the deformation parameter (VMG) exceeds a predefinable second threshold value, in particular if the deformation parameter (VMG) exceeds the predefinable second threshold value for a predefinable monitoring period, wherein in particular the load measuring device (100; 100a; 100b; 100c; 100'; 100") switches from the third operating mode (BA3) to the second operating mode if a reset command is received from an external unit (200, 300) and/or from an operator.

## Revendications

1. Dispositif de mesure de charge (100; 100a; 100b; 100c; 100'; 100") destiné à suspendre une charge, comprenant un élément de transmission de force (110), au moins une unité de mesure (120) pour déterminer au moins une grandeur de mesure de déformation (VMG) caractérisant une déformation d'au moins une zone de l'élément de transmission de force (110), une première interface (130a) pour la transmission de données sans fil avec au moins une première unité externe (200), une deuxième interface (130b) pour la transmission de données sans fil avec au moins une deuxième unité externe (300), ainsi qu'une unité de commande (140) pour commander un fonctionnement du dispositif de mesure de charge (100; 100a; 100b; 100c; 100'; 100"), dans lequel le dispositif de mesure de charge (100; 100a; 100b; 100c; 100'; 100") est conçu pour échanger des données avec ladite au moins une première unité externe (200) au moyen de la première interface (130a), et pour échanger des données avec ladite au moins une deuxième unité externe (300) au moyen de la deuxième interface (130b), dans lequel le dispositif de mesure de charge (100; 100a; 100b; 100c; 100'; 100") comprend une mémoire de configuration locale (150a) pour le stockage au moins temporaire de données de configuration (CFG), dans lequel le dispositif de mesure de charge (100; 100a; 100b; 100c; 100'; 100") est conçu pour recevoir des premières données de configuration (cfg1) de la première unité externe (200) au moyen de la première interface (130a).

2. Dispositif de mesure de charge (100; 100a; 100b; 100c; 100'; 100") selon la revendication 1, dans lequel la première interface (130a) présente un premier type d'interface, et dans lequel la deuxième interface (130b) présente un deuxième type d'interface lequel est différent du premier type d'interface, dans lequel en particulier le premier type d'interface est une interface RFID ou une interface NFC.

3. Dispositif de mesure de charge (100; 100a; 100b; 100c; 100'; 100") selon au moins l'une quelconque des revendications précédentes, dans lequel le dispositif de mesure de charge (100; 100a; 100b; 100c; 100'; 100") est conçu pour établir au moins temporairement une connexion de données avec la deuxième unité externe (300) via la deuxième interface (130b), et pour envoyer au moins une première information de fonctionnement caractérisant un état de fonctionnement du dispositif de mesure de charge (100; 100a; 100b; 100c; 100'; 100"), via la deuxième interface (130b), à la deuxième unité externe (300).

4. Dispositif de mesure de charge (100; 100a; 100b; 100c; 100'; 100") selon au moins l'une quelconque des revendications précédentes, dans lequel le dispositif de mesure de charge (100; 100a; 100b; 100c; 100'; 100") présente un dispositif d'alimentation en énergie électrique rechargeable (160), et dans lequel le dispositif de mesure de charge (100; 100a; 100b; 100c; 100'; 100") comprend en particulier un dispositif de charge (162) pour charger par induction le dispositif d'alimentation en énergie (160), dans lequel en particulier le dispositif de mesure de charge (100; 100a; 100b; 100c; 100'; 100") présente au moins un dispositif de signalisation optique (170) qui est conçu en particulier pour émettre au moins un signal optique (OS1) caractérisant un état de fonctionnement d'au moins un composant du dispositif de mesure de charge (100; 100a; 100b; 100c; 100'; 100").

5. Dispositif de mesure de charge (100; 100a; 100b; 100c; 100'; 100") selon au moins l'une quelconque des revendications précédentes, dans lequel l'unité de commande (140) est conçue pour prendre, au moins temporairement, au moins un des modes de fonctionnement suivants: a) un premier mode de fonctionnement (BA1), en particulier mode de fonctionnement veille, dans lequel en particulier l'unité de commande (140) est conçue pour évaluer, de préférence périodiquement, la grandeur de mesure de déformation (VMG) dans le premier mode de fonctionnement, en particulier pour la comparer à une première valeur de seuil, b) un deuxième mode de fonctionnement (BA2), en particulier mode de fonctionnement en direct, dans lequel en particulier l'unité de commande (140) est conçue pour évaluer, de préférence périodiquement, la grandeur de mesure de déformation (VMG) dans le deuxième mode de fonctionnement, en particulier pour la comparer à une deuxième valeur de seuil, c) un troisième mode de fonctionnement (BA3), en particulier mode de fonctionnement d'alarme, dans lequel en particulier l'unité de commande (140) est conçue pour, dans le troisième mode de fonctionnement, envoyer à la deuxième unité externe (300) au moins une deuxième information de fonctionnement caractérisant un état de fonctionnement du dispositif de mesure de charge (100; 100a; 100b; 100c; 100'; 100") et/ou pour émettre un signal optique (OS1).

6. Dispositif de mesure de charge (100; 100a; 100b; 100c; 100'; 100") selon au moins l'une quelconque des revendications précédentes, dans lequel l'élément de transmission de force (110) présente une forme de base avec une première zone d'extrémité axiale (112a) et une deuxième zone d'extrémité axiale (112b), dans lequel des premières moyens de fixation (114a) destinés à établir une connexion avec un premier composant externe (AP; 410) sont prévus dans la première zone d'extrémité axiale (112a), dans lequel des deuxièmes moyens de fixation (114b) destinés à établir une connexion avec un deuxième composant externe (SW; 420) sont prévus dans la deuxième zone d'extrémité axiale (112b), dans lequel en particulier l'élément de transmission de force (110) est réalisé pour l'essentiel en forme de plaque, dans lequel au moins une première plaque de support de circuit (180) est disposée sur une première surface (110a) de l'élément de transmission de force (110), dans lequel en particulier au moins une autre plaque de support de circuit (182) est disposée sur une deuxième surface (110b) de l'élément de transmission de force (110), qui est opposée à la première surface (110a).

7. Dispositif de mesure de charge (100; 100a; 100b; 100c; 100'; 100") selon la revendication 6, dans lequel au moins un composant de l'unité de commande (140) est disposé sur ladite au moins une première plaque de support de circuit (180), et dans lequel au moins un composant de la première et/ou de la deuxième interface (130a, 130b) est disposé sur ladite au moins une autre plaque de support de circuit (182).

8. Dispositif de mesure de charge (100; 100a; 100b; 100c; 100'; 100") selon au moins l'une quelconque des revendications précédentes, dans lequel le dispositif de mesure de charge (100; 100a; 100b; 100c; 100'; 100") présente un boîtier (190) qui entoure au moins une zone axialement centrale (112c) de l'élément de transmission de force (110), dans lequel en particulier le boîtier (190) présente au moins par zones un matériau translucide ou transparent, dans lequel en particulier le boîtier (190) comprend au moins deux demi-coques (192, 194), dans lequel une première demi-coque (192) est associée à une première surface (110a) de l'élément de transmission de force (110), et dans lequel une deuxième demi-coque (194) est associée à une deuxième surface (110b) de l'élément de transmission de force (110).

9. Système de mesure de charge (1000) comprenant au moins un dispositif de mesure de charge (100; 100a; 100b; 100c; 100'; 100") selon l'une quelconque des revendications précédentes et une centrale (1100).

10. Procédé destiné à faire fonctionner un dispositif de mesure de charge (100; 100a; 100b; 100c; 100'; 100") destiné à suspendre une charge, comprenant un élément de transmission de force (110), au moins une unité de mesure (120) pour déterminer au moins une grandeur de mesure de déformation (VMG) caractérisant une déformation d'au moins une zone de l'élément de transmission de force (110), une première interface (130a) pour la transmission de données sans fil avec au moins une première unité externe (200), une deuxième interface (130b) pour la transmission de données sans fil avec au moins une deuxième unité externe (300), ainsi qu'une unité de commande (140) pour commander un fonctionnement du dispositif de mesure de charge (100; 100a; 100b; 100c; 100'; 100"), dans lequel le dispositif de mesure de charge (100; 100a; 100b; 100c; 100'; 100") échange des données avec ladite au moins une première unité externe (200) au moyen de la première interface (130a), et dans lequel le dispositif de mesure de charge (100; 100a; 100b; 100c; 100'; 100") échange des données avec ladite au moins une deuxième unité externe (300) au moyen de la deuxième interface (130b), dans lequel le dispositif de mesure de charge (100; 100a; 100b; 100 c; 100'; 100") comprend une mémoire de configuration locale (150a) pour le stockage au moins temporaire de données de configuration (CFG), dans lequel le dispositif de mesure de charge (100; 100a; 100b; 100c; 100'; 100") reçoit des premières données de configuration (cfg1) de la première unité externe (200) au moyen de la première interface (130a).

11. Procédé selon la revendication 10, dans lequel la première interface (130a) présente un premier type d'interface, et dans lequel la deuxième interface (130b) présente un deuxième type d'interface lequel est différent du premier type d'interface, dans lequel en particulier le premier type d'interface est une interface RFID ou une interface NFC.

12. Procédé selon au moins l'une quelconque des revendications 10 à 11, dans lequel le dispositif de mesure de charge (100; 100a; 100b; 100c; 100'; 100") envoie des données de configuration (CFG) à ladite au moins une première unité externe (200) via la première interface (130a).

13. Procédé selon au moins l'une quelconque des revendications 10 à 12, dans lequel le dispositif de mesure de charge (100; 100a; 100b; 100c; 100'; 100") envoie au moins une première information de fonctionnement caractérisant un état de fonctionnement du dispositif de mesure de charge (100; 100a; 100b; 100c; 100'; 100"), via la deuxième interface (130b), à la deuxième unité externe (300).

14. Procédé selon au moins l'une quelconque des revendications 10 à 13, dans lequel le dispositif de mesure de charge (100; 100a; 100b; 100c; 100'; 100"), en particulier l'unité de commande (140) du dispositif de mesure de charge (100; 100a; 100b; 100c; 100'; 100") prend, au moins temporairement, au moins un des modes de fonctionnement suivants: a) un premier mode de fonctionnement (BA1), en particulier mode de fonctionnement veille, dans lequel en particulier l'unité de commande (140) est conçue pour évaluer, de préférence périodiquement, la grandeur de mesure de déformation (VMG) dans le premier mode de fonctionnement, en particulier pour la comparer à une première valeur de seuil, b) un deuxième mode de fonctionnement (BA2), en particulier mode de fonctionnement en direct, dans lequel en particulier l'unité de commande (140) est conçue pour évaluer, de préférence périodiquement, la grandeur de mesure de déformation (VMG) dans le deuxième mode de fonctionnement, en particulier pour la comparer à une deuxième valeur de seuil, c) un troisième mode de fonctionnement (BA3), en particulier mode de fonctionnement d'alarme, dans lequel en particulier l'unité de commande (140) est conçue pour, dans le troisième mode de fonctionnement, envoyer à la deuxième unité externe (300) au moins une deuxième information de fonctionnement caractérisant un état de fonctionnement du dispositif de mesure de charge (100; 100a; 100b; 100c; 100'; 100") et/ou pour émettre un signal optique (OS1).

15. Procédé selon la revendication 14, dans lequel le dispositif de mesure de charge (100; 100a; 100b; 100c; 100'; 100") passe du premier mode de fonctionnement (BA1) au deuxième mode de fonctionnement (BA2) lorsque a) la grandeur de mesure de déformation (VMG) dépasse une première valeur de seuil, b) et/ou lorsque la grandeur de mesure de déformation (VMG) ne dépasse pas la première valeur de seuil, mais s'écarte d'une valeur pour la grandeur de mesure de déformation qui a été déterminée dans un cycle de mesure précédent, dans lequel en particulier le dispositif de mesure de charge (100; 100a; 100b; 100c; 100'; 100") passe du deuxième mode de fonctionnement (BA2) au troisième mode de fonctionnement (BA3) lorsque la grandeur de mesure de déformation (VMG) dépasse une deuxième valeur de seuil prédéterminable, en particulier lorsque la grandeur de mesure de déformation (VMG) dépasse la deuxième valeur de seuil prédéterminable pendant une période de surveillance prédéterminable, dans lequel en particulier le dispositif de mesure de charge (100; 100a; 100b; 100c; 100'; 100") passe du troisième mode de fonctionnement (BA3) au deuxième mode de fonctionnement lorsqu'une commande de remise à zéro est reçue par une unité externe (200, 300) et/ou par un opérateur.
